(19) 

Europäisches
Patentamt
European
Patent Office
Office européen
des brevets

(11) **EP 2 369 844 A1**

(12) **EUROPEAN PATENT APPLICATION**

(43) Date of publication:
**28.09.2011 Bulletin 2011/39**

(51) Int Cl.:
***H04N 7/26*** (2006.01)

(21) Application number: **11161831.0**

(22) Date of filing: **11.07.2005**

(84) Designated Contracting States:
**DE FR GB IT NL**

(30) Priority: **12.07.2004 JP 2004204313**
**24.01.2005 JP 2005015284**

(62) Document number(s) of the earlier application(s) in
accordance with Art. 76 EPC:
**05758294.2 / 1 662 801**

(71) Applicant: **Sony Corporation**
**Tokyo 108-0075 (JP)**

(72) Inventors:
• **Suzuki, Teruhiko**
  **Minato-ku, Tokyo 108-0075 (JP)**

• **Ishigaya, Kazuhiro**
  **Minato-ku, Tokyo 108-0075 (JP)**
• **Yagasaki, Yoicho**
  **Minato-ku, Tokyo 108-0075 (JP)**

(74) Representative: **Keston, Susan Elizabeth**
  **D Young & Co LLP**
  **120 Holborn**
  **London EC1N 2DY (GB)**

<u>Remarks:</u>
  This application was filed on 11-04-2011 as a
  divisional application to the application mentioned
  under INID code 62.

(54) **Encoding apparatus and method for encoding a codeword representing the number of trailing ones inside a transform sub-block**

(57)    Encoding apparatus and method for encoding a codeword representing the number of trailing ones inside a transform sub-block. One of a plurality of VLC tables is selected depending on a context defined by the number of non-zero coefficients in top and left neighbouring sub-blocks. In a particular embodiment, an image is divided into blocks and each block is divided into sub-blocks. The context for a given sub-block of a current block is defined by the number of non-zero coefficients inside the two sub-blocks positioned at the same position inside the left and top neighbouring blocks of said current block. Once the context has been extracted, the selected VLC table gives the correspondence between the number of trailing ones and the codeword to output.

FIG. 9

**Description**

TECHNICAL FIELD

The present invention relates to an encoding method for encoding an orthogonal transformation coefficient, an encoding apparatus and a program thereof, a decoding method for decoding the same, a decoding apparatus and a program thereof.

BACKGROUND, ART

In recent years, an apparatus based on the MPEG (Moving Picture Experts Group) and other methods for compressing by discrete cosine transformation or other orthogonal transformation and motion compensation, wherein image data is handled as digital and redundancy peculiar to image information is utilized for highly efficient transmission and accumulation of information, has become widespread both in distributing information by broadcasting stations, etc. and receiving information in general households.

The MPEG2 and MPEG4 methods are followed by a proposal for an encoding method called an MPEG4/AVC (Advanced Video Coding).

In an encoding apparatus of the MPEG4/AVC method, orthogonal transformation is performed on image data to be encoded in units of block data having a size of, for example, $4\times4$; and non-0 coefficients quantity data indicating a quantity of non-0 transformation coefficients included in transformation coefficients of the block data obtained thereby is subjected to variable length coding based on a plurality of correspondence data (VLC table), each regulating correspondence of a value of non-0 coefficient quantity data by the number of $4^2$ to an encoding code thereof.

Here, the plurality of correspondence data regulates, so that bit lengths of the non-0 coefficient quantity data indicating "0" are different from one another and the maximum bit length of an encoding code used in the correspondence data becomes longer, as a bit length of non-0 coefficient quantity data indicating "0" becomes shorter.

Also, in the above encoding apparatus, the encoding efficiency is improved by selecting correspondence data; wherein an encoding code having a longer bit length is assigned to the non-0 coefficient quantity data indicating "0", as the number of variable coefficients excepting "0" and "1" becomes increased in transformation coefficients of block data around the $4\times4$ block data to be encoded.

DISCLOSURE OF THE INVENTION

PROBLEM TO BE SOLVED BY THE INVENTION

In the encoding apparatus described above, however, orthogonal transformation is sometimes performed in units of block data having a block size of $8\times8$ ($8\times8$ block data).

However, the correspondence data of the related art described above corresponds only to a value of non-0 coefficient quantity data by the number of $4^2$, and an encoding code of non-0 coefficient quantity data by the number of $8^2$ obtained by performing orthogonal transformation on $8\times8$ block data cannot be obtained.

The present invention has been made in consideration of the above circumstances and provides an encoding method, an encoding apparatus and the program for performing encoding on non-0 coefficient quantity data of transformation coefficients obtained by orthogonal transformation of image block data having a second block size, which is a multiple of a first block size, based on correspondence data conforming to the first block size.

MEANS FOR SOLVING THE PROGRAM

To overcome the above disadvantages of the related art described above and to achieve the above object, according to a first aspect of the present invention, there is provided an encoding method for performing variable length encoding by using correspondence data on non-0 coefficient quantity data indicating a quantity of non-0 transformation coefficients in a plurality of transformation coefficients obtained by performing orthogonal transformation on image block data including: when, for respective possible values of the non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity indicating "0" becomes shorter; a first step for assigning a plurality of transformation coefficients obtained by performing orthogonal transformation on image block data having a second block size, which is a multiple of the first block size, to one sub block data in accordance with a frequency corresponding to the transformation coefficients among a plurality of sub block data composed of the transformation coefficients by the same number as that in image block data having the first block size; a second step for generating the non-0 coefficient quantity data for each of the plurality of sub block data based on the transformation coefficients assigned to the sub block data in the first step; and a third step for determining the encoding codes to be assigned to the non-0 coefficient quantity data generated in the second step for each of the plurality of sub block data by using the correspondence data in which an encoding code having a shorter bit length is assigned to the non-0 coefficient quantity data indicating "0" comparing with the correspondence data used for other sub block data on the direct current component side with respect to the sub block data.

According to a second aspect of the present invention, there is provided an encoding apparatus for performing variable length encoding by using correspondence data on non-0 coefficient quantity data indicating a quantity of non-0 transformation coefficients in a plurality of transformation coefficients obtained by performing orthogonal transformation on image block data, including: when, for respective possible values of the non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity data indicating "0" becomes shorter; an assigning means for assigning a plurality of transformation coefficients obtained by performing orthogonal transformation on image block data having a second block size, which is a multiple of the first block size, to one sub block data in accordance with a frequency corresponding to the transformation coefficients among a plurality of sub block data composed of the transformation coefficients by the same number as that in image block data having the first block size; a generating means for generating the non-0 coefficient quantity data for each of the plurality of sub block data based on the transformation coefficients assigned to the sub block data by the assigning means; and an encoding means for determining the encoding codes to be assigned to the non-0 coefficient quantity data generated by the generation means for each of the plurality of sub block data by using the correspondence data in which an encoding code having a shorter bit length is assigned to the non-0 coefficient quantity data indicating "0" comparing with the correspondence data used for other sub block data on the direct current component side with respect to the sub block data.

An operation of the second aspect of the present invention is as below.
The assigning means assigns a plurality of transformation coefficients obtained by performing orthogonal transformation on image block data having a second block size, which is a multiple of a first block size, to one sub block data in accordance with a frequency corresponding to the transformation coefficients among a plurality of sub block data composed by the same number of the transformation coefficients as the number of image block data having the first block size.
Next, the generating means generates the non-0 coefficient quantity data for each of the plurality of sub block data based on the transformation coefficients assigned to the sub block data by the assigning means.
Next, the encoding means determines the encoding code to be assigned to the non-0 coefficient quantity data generated by the generating means for each of the plurality of sub block data by using the correspondence data in which an encoding code having a shorter bit length is assigned to the non-0 coefficient quantity data indicating "0" comparing with the correspondence data used for other sub block data on the direct current component side with respect to the sub block data.

According to a third aspect of the present invention, there is provided a program to be executed by a computer to perform encoding processing of variable length encoding by using correspondence data on non-0 coefficient quantity data indicating a quantity of non-0 transformation coefficients in a plurality of transformation coefficients obtained by performing orthogonal transformation on image block data, by which: when, for respective possible values of the non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity data indicating "0" becomes shorter; a first procedure for assigning a plurality of transformation coefficients obtained by performing orthogonal transformation on image block data having a second block size, which is a multiple of the first block size, to one sub block data in accordance with a frequency to the transformation coefficients among a plurality of sub block data composed of the transformation coefficients by the same number as that in image block data having the first block size; a procedure for generating the non-0 coefficient quantity data for each of the plurality of sub block data based on the transformation coefficients assigned to the sub block in first procedure; and a third procedure for determining the encoding codes to be assigned to the non-0 coefficient quantity data generated in the second procedure for each of the plurality of sub block data by using the correspondence data in which an encoding code having a shorter bit length is assigned to the non-0 coefficient quantity data indicating "0" comparing with the correspondence data used for other sub block data on the direct current component side with respect to the sub block data; are executed by the computer.

According to a fourth aspect of the present invention, there is provided a decoding method, for assigning transformation coefficients obtained by performing orthogonal transformation on image data to be encoded in units of block data having a second block size, which is a multiple of a first block size, to a plurality of sub block data in accordance with frequencies related to the transformation coefficients; non-0 coefficient quantity data indicating a quantity of non-0 transformation coefficients in transformation coefficients composing the sub block data for each of the plurality of sub block data; and, when an encoding code of the non-0 coefficient quantity data is obtained by using predetermined correspondence data, retrieving the non-0 coefficient quantity data from the encoding code by using the correspondence data, including: when, for respective possible values of the non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity data indicating "0" becomes shorter; a first step for determining the non-0 coefficient quantity data of each of the encoding codes of the plurality of sub block data by using the correspondence data, wherein an encoding code having a longer bit length comparing with that in the correspondence data used for the sub block data on the direct current component side and the non-0 coefficient quantity data indicating "0" are related for the sub block data; a second step for generating the transformation coefficients composing the sub block data based on the non-0 coefficient quantity data determined in the first step for each of the plurality of sub block data; and a third step for relocating the transformation coefficients generated in the second step and obtaining transformation coefficients of the block data having the second block size.

According to a fifth aspect of the present invention, there is provided a decoding apparatus, for assigning transformation coefficients obtained by performing orthogonal transformation on image data to be encoded in units of block data having a second block size, which is a multiple of a first block size, to a plurality of sub block data in accordance with frequencies corresponding to the transformation coefficients; generating non-0 coefficient quantity data indicating a quantity of non-0 transformation coefficients in transformation coefficients composing the sub block data for each of the plurality of sub block data; and, when an encoding code of the non-0 coefficient quantity data is obtained by using predetermined correspondence data, retrieving the non-0 coefficient quantity data from the encoding code by using the correspondence data, including: when, for respective possible values of the non-0 coefficient quantity data in the image block data having the first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity data indicating "0" becomes shorter; a determining means for determining the non-0 coefficient quantity data of each of the encoding codes of the plurality of sub block data by using the correspondence data, wherein an encoding code having a longer bit length comparing with that in the correspondence data used for the sub block data on the direct current component side and the non-0 coefficient quantity data indicating "0" are related for the sub block data as the bit lengths of non-0 coefficients quantity data indicating "0" becomes shorter; a generating means for generating the transformation coefficients composing the sub block data based on the non-0 coefficient quantity data determined in the determining means for each of the plurality of sub block data; and a retrieving means for relocating the transformation coefficients generated by the generating means and obtaining transformation coefficients of the block data having the second block size.

An operation of the fifth aspect of the present invention is as below.

The determining means determines the non-0 coefficient quantity data of each of the encoding codes of a plurality of sub block data by using the correspondence data, wherein the non-0 coefficient quantity data indicating "0" and an encoding code having a longer bit length comparing with that in the correspondence data used for the sub block data on the direct current components side are related for the sub block data.

Next, the generating means generates the transformation coefficients composing the sub block data for each of the plurality of sub block data based on the non-0 coefficient quantity data determined by the determining means.

Next, the retrieving means relocates the transformation coefficients generated by the generating means and obtains transformation coefficient of the block data having the second block size.

According to a sixth aspect of the present invention, there is provided a program to be executed by a computer, for assigning transformation coefficients obtained by performing orthogonal transformation on image data to be encoded in units of block data having a second block size, which is a multiple of a first block size, to a plurality of sub block data in accordance with frequencies related to the transformation coefficients; generating non-0 coefficient quantity data indicating a quantity of non-0 transformation coefficients in transformation coefficients composing the sub block data for each of the plurality of sub block data; and, when an encoding code of the non-0 coefficient quantity data is obtained by using predetermined correspondence data, retrieving the non-0 coefficient quantity data from the encoding code by using the correspondence data, by which: when, for respective possible values of the non-0 coefficient quantity data in the image block data having the first block size, using a plurality of correspondence data each regulating correspondence of the non-0 coefficient quantity data to the encoding code, so that bit lengths of non-0 coefficient quantity data indicating "0" become different from one another, and the maximum bit length of the encoding codes to be used by the correspondence data becomes longer as the bit lengths of the non-0 coefficient quantity data indicating "0" becomes shorter; a first procedure for determining the non-0 coefficient quantity data of each of the encoding codes of the plurality of sub block data by using the correspondence data, wherein an encoding code having a longer bit length comparing with that in the correspondence data used for the sub block data on the direct current component side and the non-0 coefficient quantity data indicating "0" are related for the sub block data; a second procedure for generating the transformation coefficients composing the sub block data based on the non-0 coefficient quantity data determined in the first procedure for each of the plurality of sub block data; and a third procedure for relocating the transformation coefficients generated in the second procedure and obtaining transformation coefficients of the block data having the second block size; are executed by the computer.

EFFECT OF THE INVENTION

According to the present invention, it is possible to provide an encoding method, an encoding apparatus and the program for encoding non-0 coefficient quantity data of transformation coefficients obtained by performing orthogonal transformation on image block data having a second block size being a multiple of a first block size, based on correspondence data conforming to the first block size.
Also, according to the present invention, a decoding method, a decoding apparatus and the program for decoding an encoding code obtained by the above encoding can be provided.

BRIEF DESCRIPTION OF THE DRAWINGS

[FIG. 1] FIG. 1 is a view of a configuration of a communication system of a first embodiment according to the present invention.
[FIG. 2] FIG. 2 is a functional block diagram of an encoding apparatus shown in FIG. 1.
[FIG. 3] FIG. 3 is a view of a configuration of a reversible coding circuit shown in FIG. 2.
[FIG. 4] FIGs. 4A and 4B are views for illustrating an order that a scanning circuit shown in FIG. 3 scans orthogonal transformation of 4x4 block data.
[FIG. 5] FIG. 5 is a view for illustrating an order that a scanning circuit shown in FIG. 3 scans orthogonal transformation of $8 \times 8$ block data.
[FIG. 6] FIG. 6 is a view for illustrating a method that a run level calculation circuit generates non-0 coefficient quantity data "TotalCoeff" of 4x4 block data and final continuing quantity data "TrailingOne".
[FIG. 7] FISs. 7A and 7B are views for illustrating a method that a two-dimensional reversible encoding circuit shown in FIG. 3 performs encoding on non-0 coefficient quantity data "TotalCoeff" and final continuing quantity data "TrailingOne" of $4 \times 4$ block data.
[FIG. 8] FIG. 8 is a view for illustrating a method that the two-dimensional reversible encoding circuit shown in FIG. 3 performs encoding on non-0 coefficient quantity data "TotalCoeff" and final continuing quantity data "TrailingOne" of $8 \times 8$ block data.
[FIG. 9] FIG. 9 is a view for illustrating a method that a two-dimensional reversible encoding circuit shown in FIG. 3 performs encoding on non-0 coefficient quantity data "TotalCoeff" and final continuing quantity data "TrailingOne" of $8 \times 8$ block data.
[FIG. 10] FIG. 10 is a view for illustrating an operation example of the reversible encoding circuit shown in FIG. 3.
[FIG. 11] FIG. 11 is a view of a configuration of a decoding apparatus shown in FIG. 1.
[FIG. 12] FIG. 12 is a view of a configuration of a reversible decoding circuit shown in FIG. 11.

LIST OF REFERENCES

1...communication system, 2...encoding apparatus, 3...decoding apparatus, 22...A/D conversion circuit, 23...screen relocating circuit, 24...computing circuit, 25...orthogonal transformation circuit, 26...quantization circuit, 27...reversible encoding circuit, 28...buffer memory, 29...inverse quantization circuit, 30...inverse orthogonal transformation circuit, 31...frame memory, 32...rate control circuit, 33...adding circuit, 41...intra-prediction circuit, 42...motion prediction compensation circuit, 45...orthogonal transformation size determination circuit, 51...scanning circuit, 52...sub block generation circuit, 53...run level calculation circuit, 54...two-dimensional reversible encoding circuit, 55...revel encoding circuit, 56...sun encoding circuit, 57...multiplexing circuit, 81...buffer memory, 82...reversible decoding circuit, 83...inverse quantization circuit, 84...inverse orthogonal transformation circuit, 85...addition circuit, 86...frame memory, 87...screen relocating buffer, 88...D/A conversion circuit, 110...separation circuit, 111...two-dimensional reversible decoding circuit, 112...level decoding circuit, 113...run decoding circuit, 114...transformation coefficient recovery circuit, 115...block recovery circuit, 116...scan transformation circuit.

BEST MODE FOR CARRYING OUT THE INVENTION

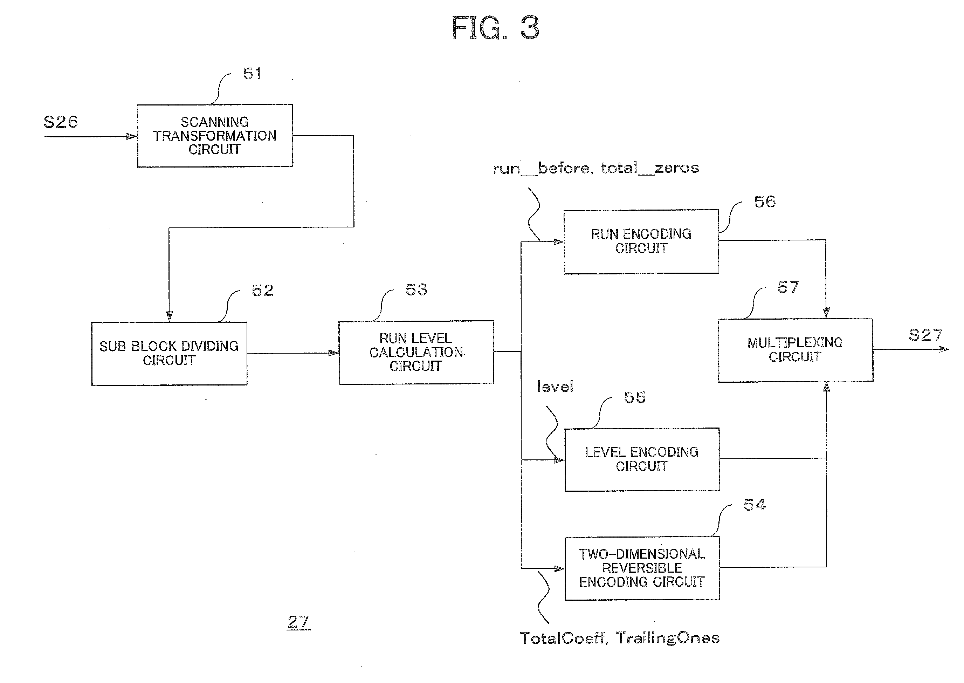

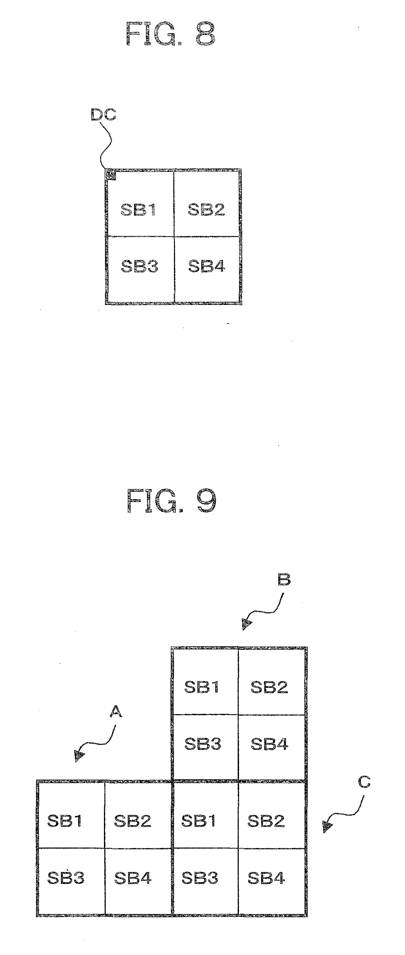

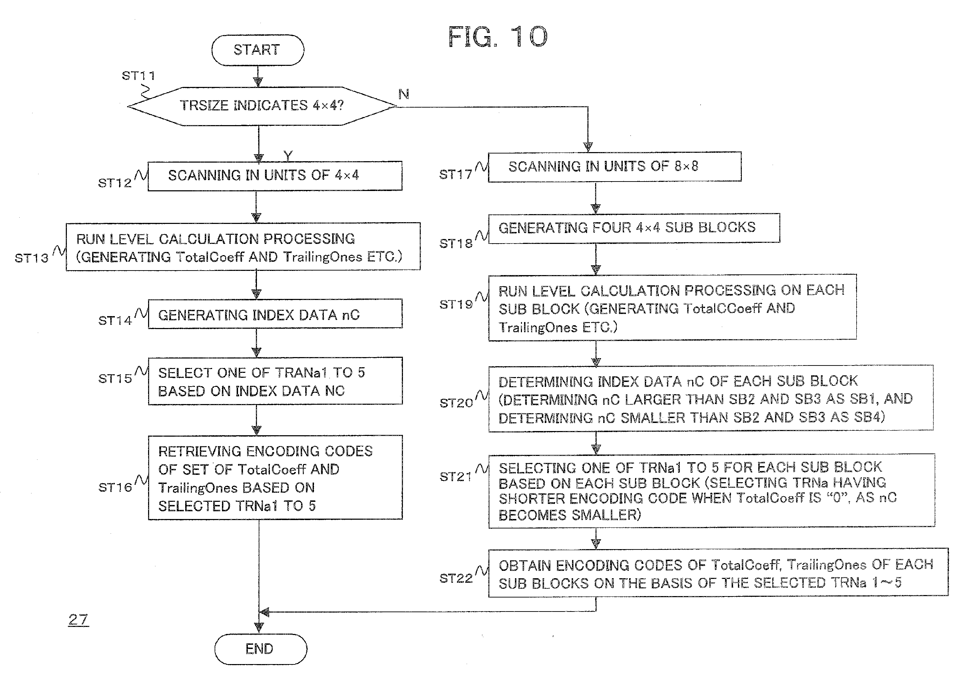

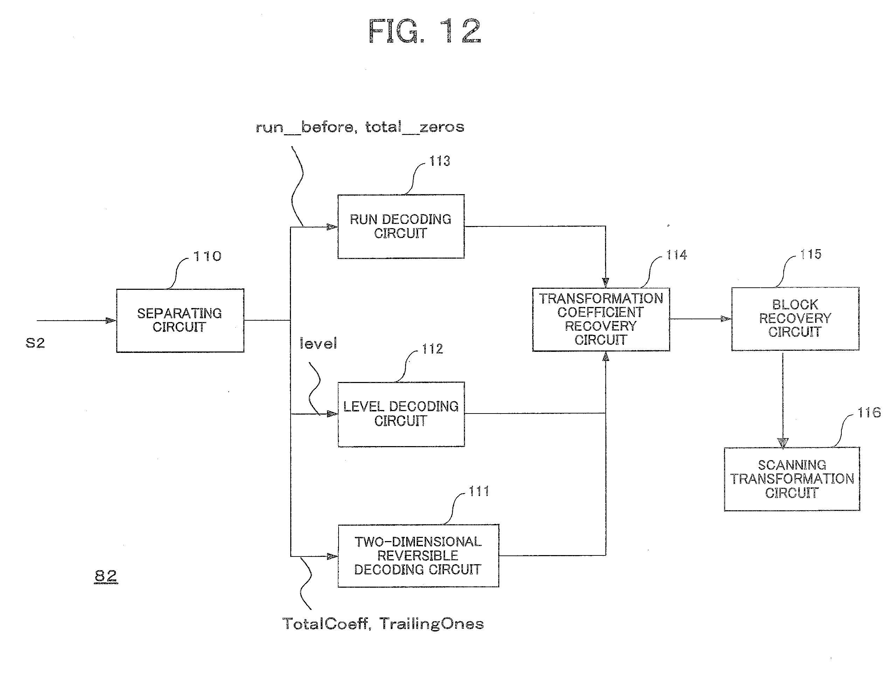

Below, an encoding apparatus according to embodiments of the present invention will be explained.
First, correspondence of components of the present embodiments and components of the present invention will be explained.
A $4 \times 4$ block size in the present embodiment corresponds to the first block size in the present invention, and an $8 \times 8$ block size in the present embodiment corresponds to the second block size in the present invention.
Also, a non-0 coefficient quantity data "TotalCoeff" in the present embodiment corresponds to the non-0 coefficient quantity data in the present invention.
Also, numbers on a right side in Table 1 correspond to encoding codes of the present invention.
Transformation table data TRNa1, 2, 3 and 4 shown in Table 1 correspond to correspondence data in the present invention.
Also, sub block data SB1, SB2, SB3 and SB4 shown in FIG. 8 correspond to sub block data in the present invention.
Steps ST17 and ST18 in FIG. 10 correspond to the first step of the first aspect of the present invention, a step ST19 corresponds to the second step, and steps ST21 and ST22 correspond to the third step.
Also, a step ST13 in FIG. 10 corresponds to the fourth step of the first aspect of the present invention, steps ST14 and ST15 correspond to the fifth step, and a step ST16 corresponds to the sixth step.
A scanning transformation circuit 51 and sub block generation circuit 52 shown in FIG. 3 correspond to the assigning means of the second aspect of the present invention.
Also, a run level calculation circuit 53 shown in FIG. 3 corresponds to the generation means of the second aspect of the present invention, and a two-dimensional reversible encoding circuit 54 corresponds to the encoding means of the second aspect of the present invention.
A two-dimensional reversible decoding circuit 111 shown in FIG. 12 corresponds to the determining means of the fifth aspect of the present invention, a transformation coefficient recovery circuit 114 corresponds to the generating means of the fifth aspect of the present invention, and a block recovery circuit 115 corresponds to the retrieving means of the fifth aspect of the present invention.
Below, a communication system 1 in the present embodiment will be explained.
First, correspondence of components of the present embodiment and components of the present invention will be explained.

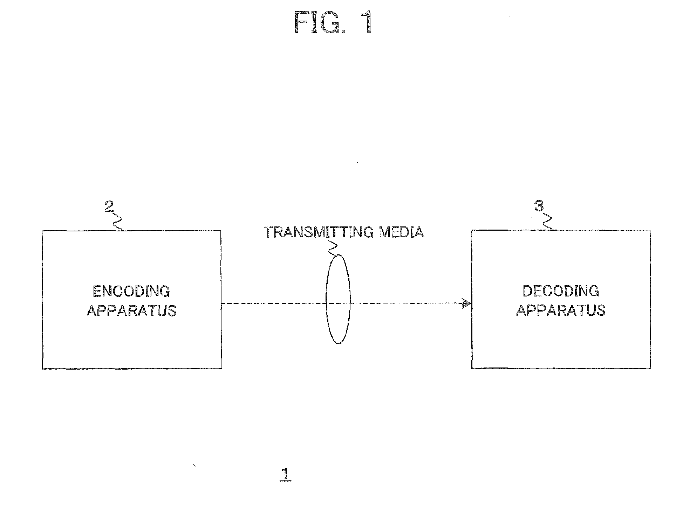

FIG. 1 is a conceptual view of the communication system 1 of the present embodiment.
As shown in FIG. 1, the communication system 1 has an encoding apparatus 2 provided on the transmission side and a decoding apparatus 3 provided on the receiving side.
The encoding apparatus 2 corresponds to the data processing apparatus and encoding apparatus of the present invention.
In the communication system 1, frame image data (a bit stream) compressed by orthogonal transformation, such as discrete cosine transformation and Karhunen-Loeve transformation, and motion compensation is generated, modulated, then, transmitted via transmission media, such as satellite broadcast wave, cable TV network, telephone line network and cellular-phone network, in the encoding apparatus 2 on the transmission side.
On the receiving side, after demodulating an image signal received in the decoding apparatus 3, frame image data expanded by inverse transformation of the orthogonal transformation and motion compensation by the above modulation is generated and used.
Note that the transmission media may be an optical disk, a magnetic disk, a semiconductor memory and other recording media.

[Encoding Apparatus 2]

Below, the encoding apparatus 2 in FIG. 1 will be explained.

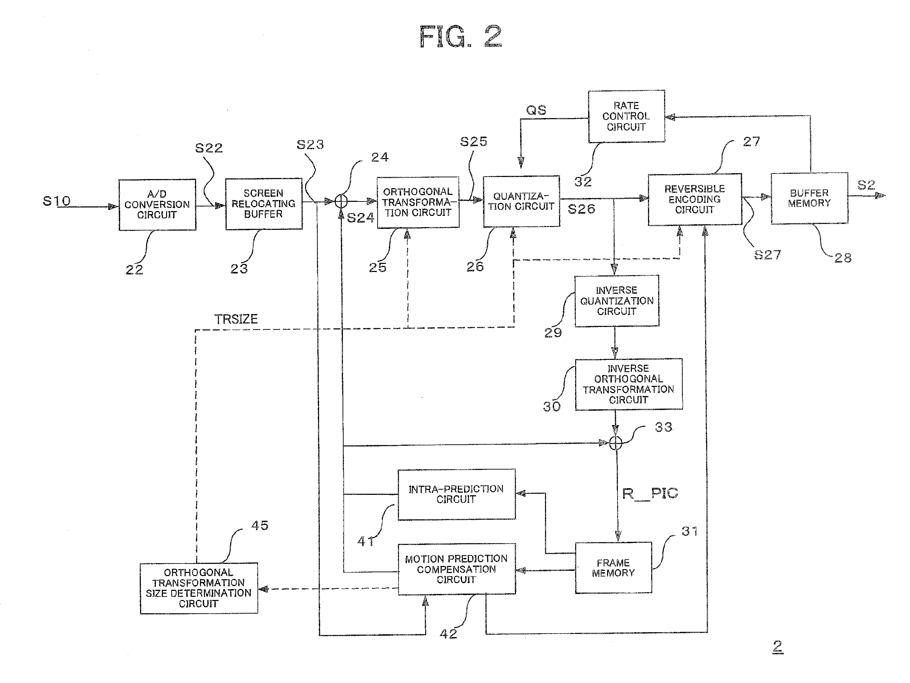

FIG. 2 is a view of the overall configuration of the encoding apparatus 2 in FIG. 1.
As shown in FIG. 2, the encoding apparatus 2 includes, for example, an A/D transformation circuit 22, a screen relocating circuit 23, a computing circuit 24, an orthogonal transformation circuit 25, a quantization circuit 26, a reversible encoding circuit 27, a buffer memory 28, an inverse quantization circuit 29, an inverse orthogonal transformation circuit 30, a frame memory 31, a rate control circuit 32, an adding circuit 33, an intra-prediction circuit 41, a motion prediction compensation circuit 42 and an orthogonal transformation size determination circuit 45.
Below, components of the encoding apparatus 2 will be explained.

[A/D Conversion Circuit 2]

The A/D conversion circuit 22 converts an input original signal S10 composed of an analog luminance signal Y and color-difference signals Pb and Pr to digital picture data S22 and outputs the same to the screen relocating circuit 23.

[Screen Relocating Circuit 23]

The screen relocating circuit 23 relocates frame data in the picture data S22 input from the A/D conversion circuit 22 to be in an encoding order in accordance with the GOP (group of pictures) structure formed by picture types I, P and B of the frame data so as to obtain original image data S23, and outputs the same to the computing circuit 24, the motion prediction compensation circuit 42 and the intra-prediction circuit 41.

[Computing Circuit 24]

The computing circuit 24 generates image data S24 indicating a difference between the original image data S23 and prediction image data input from the intra-prediction circuit 41 or the motion prediction compensation circuit 42 and outputs the same to the orthogonal transformation circuit 25.

[Orthogonal Transformation Circuit 25]

The orthogonal transformation circuit 25 performs orthogonal transformation, such as discrete cosine transformation (DCT) and Karhunen-Loeve transformation, on the image data S24 to generate image data (for example, a DCT coefficient) S25 indicating a transformation coefficient and outputs the same to the quantization circuit 26.
The orthogonal transformation circuit 25 performs orthogonal transformation on the image data S24 input from the computing circuit 24 by an orthogonal transformation size specified by an orthogonal transformation size signal TRSIZE input from the orthogonal transformation size determination circuit 45 to generate the image date S25 indicating a transformation coefficient.
In the present embodiment, block sizes of 4x4 and $8 \times 8$ are used as the orthogonal transformation size.

[Quantization Circuit 26]

The quantization circuit 26 performs quantization on the image data S25 (transformation coefficient before quantization) based on the orthogonal transformation size signal TRSIZE input from the orthogonal transformation size determination circuit 45 and a quantization scale QS input from the rate control circuit 32 so as to generate image date S26 indicating a transformation coefficient after quantization and outputs the same to the reversible encoding circuit 27 and the inverse quantization circuit 29.
For example, when the orthogonal transformation circuit 25 selects one of the 4x4 and $8 \times 8$ and performs orthogonal transformation to an accuracy of integers, a suitable coefficient to be used in normalization processing in the quantization circuit 26 is different between $4 \times 4$ and $8 \times 8$, Therefore, the quantization circuit 26 corrects the quantization scale QS input from the rate control circuit 32 based on the orthogonal transformation size indicated by the orthogonal transformation size signal TRSIZE, and quantizes the image date S25 by using the corrected quantization scale.

[Reversible Encoding Circuit 27]

The reversible encoding circuit 27 stores in the buffer memory 28 image data obtained by performing variable length encoding on the image date S26.
At this time, the reversible encoding circuit 27 stores in head data, etc. a motion vector MV input from the motion prediction compensation circuit 42 or a differential motion vector thereof, identification data of reference data, and an intra-prediction mode input from the intra-prediction circuit 41.
The reversible encoding circuit 27 performs reversible encoding processing in accordance with respective orthogonal transformations of 4x4 block size and $8 \times 8$ block size.
The encoding processing by the reversible encoding circuit 27 will be explained in detail later on.

[Buffer Memory 28]

Image data stored in the buffer memory 28 is subjected to modulation, etc. and transmitted as image data S2.
The image date S2 is decoded by the decoding apparatus 3, which will be described later on.

[Inverse Quantization Circuit 29]

The inverse quantization circuit 29 performs inverse quantization corresponding to quantization by the quantization circuit 26 on the image data S26, generates data obtained thereby, and outputs the same to the inverse orthogonal transformation circuit 30.

[Inverse Orthogonal Transformation Circuit 30]

The inverse orthogonal transformation circuit 30 performs inverse transformation of the orthogonal transformation by the orthogonal transformation circuit 25 on the data input from the inverse quantization circuit 29 to generate image data and outputs the same to the adding circuit 33.

[Adding Circuit 33]

The adding circuit 33 adds the (decoded) image data input from the inverse orthogonal transformation circuit 30 and prediction image data PI input from the selection circuit 44 to generate reference (restructured) picture data R_PIC and writes the same in the frame memory 31.

Note that a de-block filter may be provided between the adding circuit 33 and the frame memory 31. The de-block filter writes in the frame memory 31 image data obtained by eliminating block distortions in the restructure image data input from the adding circuit 33 as reference picture data R_PIC.

[Rate Control Circuit 32]

The rate control circuit 32 generates a quantization scale QS, for example, based on image data read from the buffer memory 28 and outputs the same to the quantization circuit 26.

[Intra-Prediation Circuit 41]

The intra-prediction circuit 41 determines a mode of intra-prediction and a block size of a prediction block, which give the minimum residual error, in a macro block to be subjected to intra-coding.
The intra-prediction circuit 41 uses $4 \times 4$ or $16 \times 16$ pixels as a block size.
When intra-prediction is selected, the intra-prediction circuit 41 outputs prediction image data by the intra-prediction to the computing circuit 24.

[Motion Prediction Compensation Circuit 42]

The motion prediction compensation circuit 42 performs motion prediction on images, which are already encoded, partially decoded and recorded in the frame memory 31, in order and determines a motion vector and a block size of motion compensation, which give the minimum residual error.
The motion prediction compensation circuit 42 uses $16 \times 16$, $16 \times 8$, $8 \times 16$, $8 \times 8$, 8x4, 4x8 $4 \times 4$ pixels as a block size.
When inter-prediction is selected, the motion prediction compensation circuit 42 outputs prediction image data by inter-prediction to the computing circuit 24.

[Orthogonal Transformation Size Determination Circuit 45]

The orthogonal transformation size determination circuit 45 determines an orthogonal transformation size based on a block size finally determined (selected) in either of the intra-prediction circuit 41 or the motion prediction compensation circuit 42, by which the prediction image data is selected, and outputs an orthogonal transformation size signal TRSIZE indicating the above to the orthogonal transformation circuit 25, the quantization circuit 26 and the reversible encoding circuit 27.
Specifically, when a block size of $8 \times 8$ pixels is finally selected by the intra-prediction circuit 41, the orthogonal transformation size determination circuit 45 generates an orthogonal transformation size signal TRSIZE indicating $8 \times 8$ pixels; while when a block size other than $8 \times 8$ is finally selected by the intra-prediction circuit 41, generates an transformation size signal TRSIZE indicating $4 \times 4$ pixels.
Also, when a block size of $8 \times 8$ pixels or larger is finally selected by the motion prediction compensation circuit 42, the orthogonal transformation size determination circuit 45 generates an orthogonal transformation size signal TRSIZE indicating $8 \times 8$ pixels; while when a smaller block size than $8 \times 8$ pixels is finally selected by the motion prediction compensation circuit 42, generates an orthogonal transformation size signal TRSIZE indicating $4 \times 4$ pixels.
In the present embodiment, the orthogonal transformation size determination circuit 45 generates an orthogonal transformation size signal TRSIZE indicating a block size of either of 4x4 or $8 \times 8$.

Below, variable length encoding of the image date S25 in the reversible encoding circuit 27 will be explained in detail.
FIG. 3 is a view of a configuration of the reversible encoding circuit 27 shown in FIG. 2.
As shown in FIG. 3, the reversible encoding circuit 27 has the configuration for performing variable length encoding on the image data S25 and includes, for example, a scanning transformation circuit 51, a sub block generation circuit 52, a run level calculation circuit 53, a two-dimensional reversible encoding circuit 54, a level circuit 55, a run encoding circuit 56 and a multiplexing circuit 57.

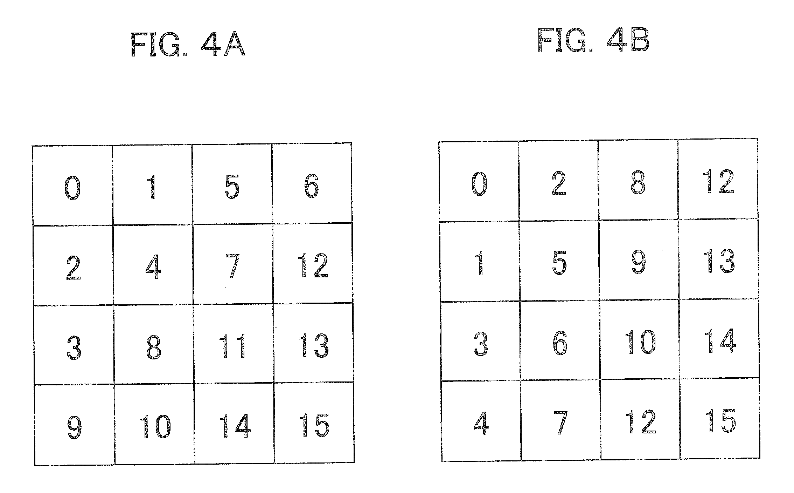

When the orthogonal transformation size signal TRSIZE input from the orthogonal transformation size determination circuit 45 indicates 4×4, the scanning transformation circuit 51 scans 16 of transformation coefficients in 4x4 block data composing the image data S26 in numerical order shown in FIG. 4A in the case of frame encoding and in numerical order shown in FIG. 4B in the case of field encoding, and outputs the same to the sub block generation circuit 52 in the scanned order.

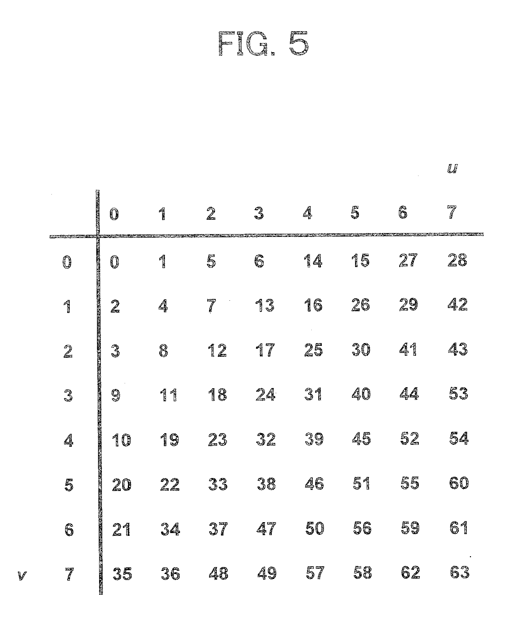

On the other hand, when the orthogonal transformation size signal TRSIZE input from the orthogonal transformation size determination circuit 45 indicates 8×8, the scanning transformation circuit 51 scans 64 of transformation coefficient data in 8×8 block data composing the image data S26 in numerical order shown in FIG. 5 and outputs the same to the sub block generation circuit 52 in the scanned order.

In FIG. 5, the upper left portion indicates direct current DC components and the lower right portion corresponds to high frequency components.

Also, in the FIG. 5, the horizontal direction indicates horizontal frequency components and the vertical direction indicates vertical frequency components.

When the orthogonal transformation size signal TRSIZE input from the orthogonal transformation size determination circuit 45 indicates 4×4, the sub block generation circuit 52 outputs 16 of transformation coefficients composing the 4×4 block data successively input from the scanning transformation circuit 51 to the run level calculation circuit 53 in order.

Also, when the orthogonal transformation size signal TRSIZE input from the orthogonal transformation size determination circuit 45 indicates 8×8, the sub block generation circuit 52 determines transformation coefficients input first to sixteenth as components of a 4x4 sub block data SB1, transformation coefficients input seventeenth to thirty second as components of a 4×4 sub block data SB2, transformation coefficients input thirty third to fourth eighth as components of a 4x4 sub block data SB3, and transformation coefficients input forty ninth to sixty fourth as components of a 4x4 sub block data SB4 in the 64 transformation coefficients composing the 8×8 block data input from the scanning transformation circuit 51 and outputs these to the run level calculation circuit 53.

When the orthogonal transformation size signal TRSIZE input from the orthogonal transformation size determination circuit 45 indicates 4×4, the run level calculation circuit 53 generates level data "level", run data "run_before", run total quantity data "total_zero" non-0 coefficient quantity data "TotalCoeff", final continuing quantity data "TrailingOnes" and encoding data "trailing_ones_sing_flag" for a series of 16 of transformation coefficients successively input from the sub block generation circuit 52.

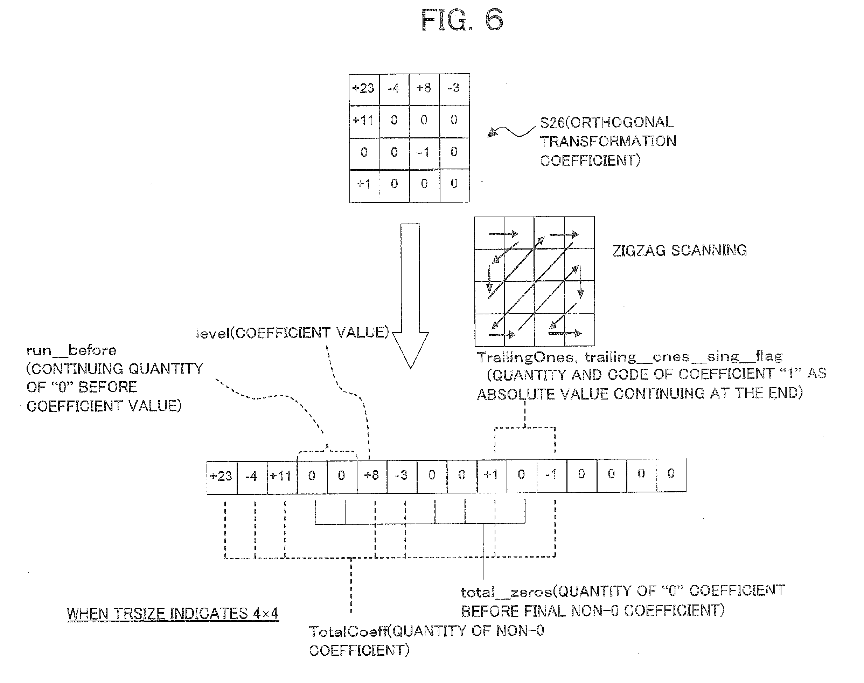

Here, the level data "level" indicates values of respective transformation coefficients (transformation coefficients other than "0" and "1") in the 4×4 block data, which art "-3", "+8", "+11", "-4" and "+23" in the cage in FIG. 6.

The run data "run_before" indicates the number of continuing 0 coefficients (transformation coefficients of 0) before a non-0 coefficient in the 4x4 block data, which are "1", "2", "0", "2", "0" and "0" in the case in FIG. 6.

The run total quantity data "total_zero" indicates the number of 0 coefficients before the final non-0 coefficient in the 4x4 block data, which is "5" in the case in FIG. 6.

The non-0 coefficient quantity data "TotalCoeff" indicates the number of non-0 coefficients in 4x4 block data, which is "7" in the case in FIG. 6.

The final continuing quantity data "TrailingOnes" indicates the number of continuing transformation coefficients of 1 as an absolute value in the 4x4 block data, which is "2" in the in FIG. 6.

The encoding data "trailing_ones_sing_flag" indicates codes of continuing transformation coefficients of "1" as an absolute value at the end of the 4x4 block data, which is "-" and "+" in the case in FIG. 6.

The run level calculation circuit 53 outputs the run data "run_before" and the run total quantity data "total_zero" to the run encoding circuit 56.

The run level calculation circuit 53 outputs the level data "level" to the level encoding circuit 55.

The run level calculation circuit 53 outputs the non-0 coefficient quantity data "TotalCoeff", final continuing quantity data "TrailingOnes" and encoding data "trailing_ones_sing_flag" to the two-dimensional reversible encoding circuit 54.

When the orthogonal transformation size signal TRSIZE input from the orthogonal transformation size determination circuit 45 indicates 4x4, the run level calculation circuit 53 performs the same processing as that in the case of the 4x4 described above respectively on the 4x4 blocks SB1, SB2, SB3 SB4 input from the block generation circuit 52 to generate level data "level", run data "run_before", run total quantity data "total_zero, non-0 coefficients quantity data "TotalCoeff", final continuing quantity data "TrailingOnes" and encoding data "trailing_ones_sing_flag".

The two-dimensional reversible encoding circuit 54 performs variable length encoding on the non-0 coefficient quantity data "TotalCoeff", final continuing quantity data "TrailingOnes" and encoding data "trailing_ones_sing_flag".

Below, an encoding method of non-0 coefficient quantity "TotalCoeff" and final continuing quantity data "TrailingOnes" by the two-dimensional reversible encoding circuit 54 will be explained.

First, the case where the orthogonal transformation size signal TRSIZE indicates 4x4 will be explained.

When the orthogonal transformation size signal TRSIZE input from the orthogonal transformation size determination circuit 45 indicates 4x4, the two-dimensional reversible encoding circuit 54 generates (retrieves) encoding codes of the non-0 coefficient quantity data "TotalCoeff" and final continuing quantity data "TrailingOnes" of the block data based on the number of transformation coefficients other than "0" and "1" (or "0") among transformation coefficients in $4\times4$ block data around the $4\times4$ block data to be processed and based on total transformation table data TRNa below.

[Table 1]

| The total transformation table data TRNa | | | | | | |
|---|---|---|---|---|---|---|
| TrailingOnes | TotalCoeff | 0 <= nC < 2 | 2 <= nC < 4 | 4 <= nC < 8 | 8 <= nC | nC == -1 |
| | | TRNa1 | TRNa2 | TRNa3 | TRNa4 | TRNa5 |
| 0 | 0 | 1 | 11 | 1111 | 0000 11 | 01 |
| 0 | 1 | 0001 01 | 0010 11 | 0011 11 | 0000 00 | 0001 11 |
| 1 | 1 | 01 | 10 | 1110 | 0000 01 | 1 |
| 0 | 2 | 0000 0111 | 0001 11 | 0010 11 | 0001 00 | 0001 00 |
| 1 | | 0001 00 | 0011 1 | 0111 1 | 0001 01 | 0001 10 |
| 2 | 2 | 001 | 011 | 1101 | 0001 10 | 001 |
| 0 | 3 | 0000 0011 1 | 0000 111 | 0010 00 | 0010 00 | 0000 11 |
| 1 | 3 | 0000 0110 | 0010 10 | 0110 0 | 0010 01 | 0000 011 |
| 2 | 3 | 0000 101 | 0010 10 | 0111 0 | 0010 10 | 0000 010 |
| 3 | 3 | 0001 1 | 0101 | 1100 | 0010 11 | 0001 01 |
| 0 | 4 | 0000 0001 11 | 0000 0111 | 0001 111 | 0011 00 | 0000 10 |
| 1 | 4 | 0000 0011 0 | 0001 10 | 0101 0 | 0011 01 0011 01 | 0000 0011 |
| 2 | 4 | 0000 0101 | 0001 01 | 0101 1 | 0011 10 | 0000 0010 |
| 3 | 4 | 0000 11 | 0100 | 1011 | 0011 11 | 0000 000 |
| 0 | 5 | 0000 0000 111 | 00000 0100 | 0001 011 | 0100 00 | |
| 1 | 5 | 0000 0001 10 | 0000 110 | 0100 0 | 0100 01 | - |
| 2 | 5 | 0000 0010 0000 100 | 0000 101 0011 0 | 0100 1 1010 | 0100 10 0100 11 | - |
| 0 | 6 | 0000 0000 0111 1 | 0000 00011 1 | 0001 001 | 0101 00 | - |
| 1 | 6 | 0000 0000 110 | 0000 0110 | 0011 10 | 0101 01 | |
| 2 | 6 | 0000 0001 01 | 0000 0101 | 0011 | 0101 10 | - |
| 3 | 6 | 0000 0100 | 0010 00 | 1001 | 0101 11 | - |
| 0 | 7 | 0000 0000 0101 1 | 0000 0001 111 | 0001 000 | 0110 00 | - |
| 1 | 7 | 0000 0000 0111 0 | 0000 0011 0 | 0010 10 | 0110 01 | - |
| 2 | 7 | 0000 0000 101 | 0000 0010 1 | 0010 01 | 0110 10 | - |
| 3 | 7 | 0000 0010 0 | 0001 00 | 1000 | 0110 11 | - |
| 0 | 8 | 0000 0000 0100 0 | 0000 0001 011 | 0000 1111 | 0111 00 | - |

(continued)

| TrailingOnes | TotalCoeff | 0 <= nC < 2 | 2 <= nC < 4 | 4 <= nC < 8 | 8 <= nC | nC == -1 |
|---|---|---|---|---|---|---|
| | | TRNa1 | TRNa2 | TRNa3 | TRNa4 | TRNa5 |
| 1 | 8 | 0000 0000 0101 0 | 0000 0001 110 | 0001 110 | 0111 01 | |
| 2 | 8 | 0000 0000 0110 1 | 0000 0001 101 | 0001 101 | 0111 10 | - |
| 3 | 8 | 0000 0001 00 | 0000 100 | 0110 1 | 0111 11 | - |
| 0 | 9 | 0000 0000 0011 11 | 0000 0000 1111 | 0000 1011 | 1000 00 | - |
| 1 | 9 | 0000 0000 0011 10 | 0000 0001 010 | 0000 1110 | 1000 01 | |
| 2 | 9 | 0000 0000 0100 1 | 0000 0001 001 | 0001 010 | 1000 10 | - |
| 3 | 9 | 0000 0000 100 | 0000 0010 0 | 0011 00 | 1000 11 | - |
| 0 | 10 | 0000 0000 0010 11 | 0000 0000 1011 | 0000 0111 1 | 1001 00 | - |
| 1 | 10 | 0000 0000 0010 10 | 0000 0000 1110 | 0000 1010 | 1001 01 | - |
| 2 | 10 | 0011 01 0011 01 | 0000 0000 1101 | 0000 1101 | 1001 10 | - |
| 3 | 10 | 0000 0000 0110 0 | 0000 0001 100 | 0001 100 | 1001 11 | - |
| 0 | 11 | 0000 0000 0001 111 | 0000 0000 1000 | 0000 0101 1 | 1010 00 | - |
| 1 | 11 | 0000 0000 0001 110 | 0000 0000 1010 | 0000 0111 0 | 1010 01 | - |
| 2 | 11 | 0000 0000 0010 01 | 0000 0000 1001 | 0000 1001 | 1010 10 | - |
| 3 | 11 | 0000 0000 0011 00 | 0000 0001 000 | 0000 1100 | 1010 11 | - |
| 1 | 12 | 0000 0000 0001 010 | 0000 0000 0111 0 | 0000 0101 0 | 1011 01 | - |
| 2 | 12 | 0000 0000 0001 101 | 0000 0000 0110 1 | 0000 0110 1 | 1011 10 | - |
| 3 | 12 | 0000 0000 0010 00 | 0000 0000 1100 | 0000 1000 | 1011 11 | - |
| 0 | 13 | 0000 0000 0000 1111 | 0000 0000 0101 1 | 0000 0011 01 | 1100 00 | - |
| 1 | 13 | 0000 0000 0000 001 | 0000 0000 0101 0 | 0000 0011 1 | 110001 | - |
| 2 | 13 | 0000 0000 0001 001 0001 001 | 0000 0000 0100 1 | 0000 0100 1 | 1100 10 | - |

(continued)

| The total transformation table data TRNa | | | | | | |
|---|---|---|---|---|---|---|
| TrailingOnes | TotalCoeff | 0 <= nC < 2 | 2 <= nC < 4 | 4 <= nC < 8 | 8 <= nC | nC == -1 |
| | | TRNa1 | TRNa2 | TRNa3 | TRNa4 | TRNa5 |
| 3 | 13 | 0000 0000 0001 100 | 0000 0000 0110 0 | 0000 0110 0 | 1100 11 | - |
| 0 | 14 | 0000 0000 0000 1011 | 0000 0000 0011 1 | 0000 0010 01 | 1101 00 | - |
| 1 | 14 | 0000 0000 0000 1110 | 0000 0000 0010 11 | 0000 0011 00 | 1101 01 | - |
| 2 | 14 | 0000 0000 0000 1101 | 0000 0000 0011 0 | 0000 0010 11 | 1101 10 | - |
| 3 | 14 | 0000 0000 0001 000 | 0000 0000 0100 0 | 0000 0010 10 | 1101 11 | - |
| 0 | 15 | 0000 0000 0000 0111 | 0000 0000 0010 01 | 0000 0001 01 | 1110 00 | - |
| 1 | 15 | 0000 0000 0000 1010 | 0000 0000 0010 00 | 0000 0010 00 | 1110 01 | - |
| 2 | 15 | 0000 0000 0000 1001 | 0000 0000 0010 10 | 0000 0001 11 | 1110 10 | - |
| 3 | 15 | 0000 0000 1100 | 0000 0000 0000 1 | 0000 0001 10 | 1110 11 | |
| 0 | 16 | 0000 0000 0000 0100 | 0000 0000 0001 11 | 0000 0000 01 | 1111 00 | - |
| 1 | 16 | 0000 0000 0110 | 0000 0001 10 | 0001 00 | 1111 01 | |
| 2 | 16 | 0000 0000 0000 0101 | 0000 0000 0001 01 | 0000 0000 11 | 1111 10 | - |
| 3 | 16 | 0000 0000 0000 1000 | 0000 0000 0001 00 | 0000 0000 10 | 1111 11 | |

The total transformation table data TPNa in Table 1 above regulates five transformation table data TRNa1, 2, 3, 4 and 5.

The transformation table data TRNa1, 2, 3 and 4 have the following characteristics.

Each of the transformation table data TRNa1, 2, 3 and 4 regulates an encoding code of a set of non-0 coefficient quantity data "'TotalCoeff" and final continuing quantity data "TrailingOnes".

Here, the transformation table data TRNa1, 2, 3 and 4 are regulated, so that the bit lengths of the non-0 coefficient quantity data "TotalCoeff'" indicating "0" are different from one another and the maximum bit length of the encoding code becomes longer as the bit length of the non-0 coefficient quantity data "TotalCoeff" indicating "0" becomes shorter.

When the $4 \times 4$ block data positions at a complicated image region, there is little possibility that the non-0 coefficient quantity data "TotalCoeff" becomes "0", and there is a characteristic that the values are dispersed in a wide range from 0 to 15.

Also, when the $4 \times 4$ block data positions at a flat image region with a little changes, there is high possibility that the non-0 coefficient quantity data "TotalCoeff" becomes "0", and there is a characteristic that the value scarcely becomes high.

Accordingly, by regulating the transformation table data TRNa1, 2, 3 and 4 as above, transformation table data, wherein a bit length of an encoding code to be assigned to non-0 coefficient quantity data "TotalCoeff" indicating "0" is long but the maximum bit length in the encoding code is short, is selected for a 4x4 block data in a complicated image region, so that the entire encoding efficiency is improved.

On the other hand, transformation table data, wherein the maximum bit length in the encoding code is long but an encoding code to be assigned to non-0 coefficient quantity data "TotalCoefff" indicating "0" is short, is selected for a 4x4 block data in a flat image region, so that the entire encoding efficiency is improved.

Also, for a plurality of sets, wherein final continuing quantity data "TrailingOnes" is different but non-0 coefficient quantity data "TotalCoeff" is same, it is regulated, so that a bit length of an encoding code becomes the same or longer as the final continuing quantity data "TrailingOnes" becomes larger.

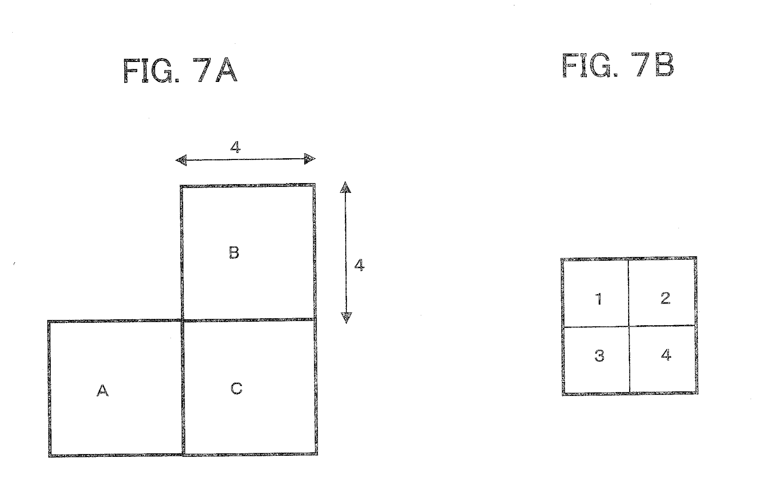

As shown in FIG. 7A and FIG. 7B, the two-dimensional reversible encoding circuit 54 determines the number of transformation coefficients other than "0" and "1" (or "0") in adjacent $4 \times 4$ block data A to be displayed on the left of the $4 \times 4$ block data C to be processed as "nA", and the number of transformation coefficients other than "0" and "1" (or "0"') in adjacent $4 \times 4$ block data A to be displayed above the $4 \times 4$ block data C to be processed as "nB".
Then, the two-dimensional reversible encoding circuit 54 generates index data "nC" from "nC = (nA+nB+1) >> 1".
Wherein ">>1" indicates shifting by "1" to the right.
The two-dimensional reversible encoding circuit 54 selects one of transformation table data TRNa1, 2, 3, 4 and 5 regulated by the total transformation table data TRNa shown in Table 1 based on the index data "nc".
When nA=2 and nB=3, nC = (2+3+1) >> 1 = 3 stands, and the two-dimensional reversible encoding circuit 54 selects the transformation table data TRNa2.
The two-dimensional reversible encoding circuit 54 uses the transformation table data TRNa5 for encoding a DC value of a color difference signal.
Then, the two-dimensional reversible encoding circuit 54 retrieves encoding codes of non-0 coefficient quantity "Total-Coeff" and final continuing quantity data "TrailingOnes" in the above $4 \times 4$ block data by using the selected transformation table data TRNa1, 2, 3, 4 and 5, and outputs the same to the multiplexing circuit 57.

Next the case where the orthogonal transformation size signal TRSIZE indicates $8 \times 8$ will be explained.
The four sub block data SB1, SB2, SB3 and SB4 generated by the sub block generation circuit 52 can be expressed as shown in FIG. 8.
In FIG. 8, the upper left portion of the rectangular shape indicates low frequency components and the lower right portion indicates high frequency components.
Accordingly, there is a relatively high possibility that non-0 coefficients exist in the sub block data SB1, while there is high probability that almost all coefficients becomes "0" in the sub block data SB4.
Therefore, for attaining high encoding efficiency, an encoding code having a short encoding length should be assigned to a value "0" (a small value) in the sub block data SB4 and, inversely, an encoding code having a short encoding length should be assigned to a large value in the sub block data SB1.
Here, when the orthogonal transformation size signal TRSIZE indicates $8 \times 8$, index data "nC" is generated based on any one of (method 1) to (method 4) described below.
Note that, the method for generating the index data. "nC" is the same in the decoding apparatus 3.


(Method 1)

When assuming that the $8 \times 8$ block data C shown in FIG. 9 is to be processed, the two-dimensional reversible encoding circuit 54 determines that index data "nC" of the sub block SB1 is "8", index data "nC" of the sub block SB2 and SB3 is "4" and index data "nC" of the sub block SB4 is "0".
Therefore, the two-dimensional reversible encoding circuit 54 uses transformation table data TRNa4 shown in Table 1 for encoding the sub block SB1, uses transformation table data TBNa3 for encoding the sub blocks SB2 and SB3, and uses transformation table data TRNa1 for encoding the sub block SB4.


(Method 2)

When assuming that the $8 \times 8$ block data C shown in FIG. 9 is to be processed, the two-dimensional reversible encoding circuit 54·determines that index data "nC" of the sub block SB1 is "8", index data "nC" of the sub block SB2 and SB3 is "2" and index data "nC" of the sub block SB4 is "0".
Therefore, the two-dimensional reversible encoding circuit 54 uses transformation table data TRNa4 shown in Table 1 for encoding the sub block SB1, uses transformation table data TRNa2 for encoding the sub blocks SB2 and SB3, and uses transformation table data TRNa1 for encoding the sub block SB4.


(Method 3)

When assuming that the $8 \times 8$ block data C shown in FIG. 9 is to be processed, the two-dimensional reversible encoding circuit 54 determines that index data "nC" of the sub block SB1 is "4", index data "nC" of the sub block SB2 and SB3 is "2" and index data "nC" of the sub block SB4 is "0".
Therefore, the two-dimensional reversible encoding circuit 54 uses transformation table data TRNa3 shown in Table 1 for encoding the sub block SB1, uses transformation table data TRNa2 for encoding the sub blocks SB2 and SB3, and uses transformation table data TRNa1 for encoding the sub block SB4.

(Method 4)

When adjacent block data A and B on the left and above the block data C to be processed as shown in FIG. 9 are orthogonally transformed by $8 \times 8$, the two-dimensional reversible encoding circuit 54 generates index data "nC" of the sub block data SB1, SB2, SB3 and SB4 in the block data C by using "nA" and "nB" of sub block data SB1, SB2, SB3.and SB4 at the same positions in the block data A and

For example, the two-dimensional reversible encoding circuit 54 uses "nA" of the sub block data SB1 in the block data A and "nB" of the sub block data SB1 in the block data B to generate index data "nC" of the sub block data SB1 in the block data C from "nC = (nA+nB+1) >> 1".

Also, when one of the block data A and B is orthogonally transformed by $8 \times 8$ and the other is orthogonally transformed by $4 \times 4$, the two-dimensional reversible encoding circuit 54 determines the number of coefficients other than "0" and "1" (or "0") in sub block data SB1, SB2, SB3 and SB4 at the same positions in the 8x8 orthogonal transformation as index data "nC".

For example, when the block data A is $8 \times 8$ and the block data B is $4 \times 4$, the two-dimensional reversible encoding circuit 54 determines the number "nA" of coefficients other than "0" and "1" (or "0") in the block data A as index data "nC" of the sub block data SB1 in the block data C.

Also, when both of the block data A and B are $4 \times 4$, the two-dimensional reversible encoding circuit 54 uses "nA" and "nB" of sub block data SB1, SB2, SB3 and SB4 in the block data A and B at the same positions of the sub block data SB1, SB2, SB3 and SB4 in the block data C to generate index data "nC" of the sub block data SB1, SB2, SB3 and SB4 in the block data C from "nC" = (nA+nB+1) >> 1".

Note that the above methods of generating index data "nC" are just examples and the method is not particularly limited as far as it uses "nA" and "nB" of sub block data SB1, SB2, SB3 and SB4 to generate index data "nC" of the sub block data SB1, SB2, SB3 and SB4 in the block data C.

The two-dimensional reversible encoding circuit 54 transforms the sub block data SB1, SB2, SB3 and SB4 in the block data C by using transformation table data TRNa1 to 5 selected based on the index data "nC" corresponding thereto.

Note that, when both of the block data A and B are 4x4 in the method 4, the two-dimensional reversible encoding circuit 54 may determine index data "nC" of the sub block data SB1, SB2, SB3 and SB4 in the block date C in accordance with positions of sub block data SB1, SB2, SB3 and SB4 thereof as in any one of the (method 1), (method 2) and (method 3).

As explained above, when the orthogonal transformation size signal TRSIZE input from the orthogonal transformation size determination circuit 45 indicates $8 \times 8$, the two-dimensional reversible encoding circuit 54 determines or generates index data "nC" for four sub block data SB1, SB2, SB3 and SB4 generated by the sub block generation circuit 52 from the $8 \times 8$ block data to be processed.

Then, the two-dimensional reversible encoding circuit 54 selects one of the transformation table data TRNa1 to 5 shown in Table 1 based on the above determined or generated index data "nC".

The two-dimensional reversible encoding circuit 54 uses the selected transformation table data TRNa1 to 5 to retrieve encoding codes of non-0 coefficient quantity data "TotalCoeff" and final continuing quantity data "TrailingOnes" of the block data to be processed.

Below, an operation example of determining encoding codes of non-0 coefficient quantity data "TotalCoeff" and final continuing quantity data "'TrailingOnes" obtained from each block data in the image data S26 in the reversible encoding circuit 27 shown in FIG. 3 will be explained.

FIG. 10 is a flowchart for explaining the operation example.

Below, each step in FIG. 10 will be explained.

Step ST11:

When the orthogonal transformation size signal TRSIZE input from the orthogonal transformation size determination circuit 45 shown in FIG. 2 indicates $4 \times 4$, the reversible encoding circuit 27 shown in FIG. 3 proceeds to a step ST17 and, then, processing in steps ST17 to ST22 is performed.

On the other hand, when the orthogonal transformation size signal TRSIZE indicates 4x4, the reversible encoding circuit 27 proceeds to a step ST12 and, then, processing in steps ST12 to ST16 is performed.

Step ST12:

When the orthogonal transformation size signal TRSIZE input from the orthogonal transformation size determination circuit 45 indicates $4 \times 4$, the scanning transformation circuit 51 scans 16 of transformation coefficients in 4x4 block size composing the image data S26 in numerical order shown in FIG. 4A at the time of frame encoding or in numerical order shown in FIG. 4B at the time of field encoding, and outputs the same to the sub block generation circuit 52 in the scanned order.

The sub block generation circuit 52 outputs the transformation coefficients input from the scanning transformation circuit 51 as they are to the run level calculation circuit 53.

Step ST13:

When the orthogonal transformation size signal TRSIZE input from the orthogonal transformation size determination circuit 45 indicates $4\times4$, the run level calculation, circuit 53 generates level data "level", run data "run_before", run total quantity data "total_zero, non-0 coefficient quantity data "TotalCoeff", final continuing quantity data "TrailingOnes" and encoding data "trailing_ones_sing_flag" for a series of the 16 transformation coefficients input successively from the sub block generation circuit 52.

The run level calculation circuit 53 outputs non-0 coefficient quantity data "TotalCoeff" and final continuing quantity data "TrailingOnes" to the two-dimensional reversible encoding circuit 54.

Step ST14:

The two-dimensional reversible encoding circuit 54 determines, as shown in FIG. 7A and FIG. 7B, the number of transformation coefficients other than "0" and "1" (or "0") in adjacent $4\times4$ block data A to be displayed on the left of 4x4 block data C to be processed is "nA", and the number of transformation coefficients other than "0" and "1" (or "0") in adjacent $4\times4$ block data B to be displayed above the $4\times4$ block data C to be processed is "nB".

Then, the two-dimensional reversible encoding circuit 54 generates index data "nC" from "nC = (nA+nB+1) >> 1".

step ST15:

The two-dimensional reversible encoding circuit 54 selects one of transformation table data TRNa1 to 5 shown in Table 1 based on the index data "nC" generated at the step ST14.

step ST16:

The two-dimensional reversible encoding circuit 54 retrieves encoding codes of non-0 coefficient quantity data "TotalCoeff" and final continuing quantity data "TrailingOnes" of the $4\times4$ block data input at the step ST13 by using the transformation table data TRANa1, 2, 3, 4 and 5 selected at the step ST15 and outputs the same to the multiplexing circuit 57.

Step ST17:

When the orthogonal transformation size signal TRSIZE input from the orthogonal transformation size determination circuit 45 indicates $8\times8$, the scanning transformation circuit 51 scans 64 of transformation coefficient data in the $8\times8$ block data composing the image data S26 in numerical order shown in FIG. 5 and outputs the same to the sub block generation circuit 52 in the scanned order.

Step ST18:

When the orthogonal transformation size signal TRSIZE input from the orthogonal transformation size determination circuit 45 indicates $4\times4$, the sub block generation circuit 52 outputs 16 of transformation coefficients composing the $4\times4$ block data input successively from the scanning transformation circuit 51 to the run level calculation circuit 53 in order.

When the orthogonal transformation size signal TRSIZE input from the orthogonal transformation size determination circuit 45 indicates $8\times8$, the sub block generation circuit 52 determines transformation coefficients input first to sixteenth as components of a 4x4 sub block data SB1, transformation coefficients input seventeenth to thirty second as components of a $4\times4$ sub block data SB2, transformation coefficients input thirty third to fourth eighth as components of a $4\times4$ sub block data SB3, and transformation coefficients input forty ninth to sixty fourth as components of a $4\times4$ sub block data SB4 in the 64 of transformation coefficients composing the $8\times8$ block data input from the scanning transformation circuit 51 and outputs these to the rub level calculation circuit 53.

Step ST19:

When the orthogonal transformation size signal TRSIZE input from the orthogonal transformation size determination circuit 45 indicates 8×8, the run level calculation circuit 53 performs the same processing as that in the case of 4×4 explained above to generate level data "level", run data "run_before", run total quantity data "total_zero, non-0 coefficient quantity data "TotalCoeff", final continuing quantity data "TrailingOnes" and encoding data "trailing_ones_ sing_flag" for the respective 4×4 sub block data SB1, SB2, SB3 and SB4 input from the sub block generation circuit 52. The run level calculation circuit 53 outputs non-0 coefficient quantity data "TotalCoeff" and final continuing quantity data "TrailingOnes" to the two-dimensional reversible encoding circuit 54.

Step ST20:

The two-dimensional reversible encoding circuit 54 determines or generates index data "nC" for the respective sub block data SB1, SB2, SB3 and SB4 composing the 8×8 block data to be processed by following any one of the (method 1) to (method 5) described above.

Step ST21:

The two-dimensional reversible encoding circuit 54 selects one of the transformation table data TRNa1 to 5 shown in Table 1 based on the index data "nC" determined or generated at the step ST20.

step ST22:

The two-dimensional reversible encoding circuit 54 retrieves encoding codes of non-0 coefficient quantity data "TotalCoeff" and final continuing quantity data "TrailingOnes" of the respective sub block data. SB1, SB2, SB3 and SB4 input at the step ST19 by using the transformation table data TRNa1, 2, 3, 4 and 5 selected at the step ST21 and outputs the same to the multiplexing circuit 57.
Below, the level encoding circuit 55 will be explained.
The level encoding circuit 55 performs variable length encoding on the level data "level" input from the run level calculation circuit 53.
Specifically, the level encoding circuit 55 extracts parameters called "level_prefix" and "level_suffix" from the level data "level".
Then, the level encoding circuit 55 performs variable length encoding on the parameter "level_prefix" based on transformation table data TRNb shown in Table 2 below.
[Table 2]

| The transformation table data TRNb | |
|---|---|
| level_prefix | Bit String |
| 0 | 1 |
| 1 | 01 |
| 2 | 001 |
| 3 | 0001 |
| 4 | 0000 1 |
| 5 | 0000 01 |
| 6 | 0000 001 |
| 7 | 0000 0001 |
| 8 | 0000 0000 1 |
| 9 | 0000 0000 01 |
| 10 | 0000 0000 001 |
| 11 | 0000 0000 0001 |

(continued)

| The transformation table data TRNb | |
|---|---|
| level_prefix | Bit String |
| 12 | 0000 0000 0000 1 |
| 13 | 0000 0000 0000 01 |
| 14 | 0000 0000 0000 001 |
| 15 | 0000 0000 0000 0001 |

The parameter "level_suffix" is encoded as an unsigned integer by a bit length given by "suffxLength". Here, a relationship of the level data "level" and the parameters "level_prefix" "level_suffix" is regulated by the following formulas (1) and (2).

[Formula 1]

$$levelCode = (level\_prefix << suffxLength) + level\_suffix \qquad ...(1)$$

[Formula 2]

$$\text{when "levelCode" is even number: } level = (levelCode + 2) >> 1$$

$$\text{when "levelCode" is not even number: } level = (-levelCode - 1) >> 1$$

$$...(2)$$

The level encoding circuit 55 outputs encoding code obtained by performing variable length encoding on the level data "level" to the multiplexing circuit 57.

Below, the run encoding circuit 56 will be explained.

The run encoding circuit 56 performs variable length encoding on the run data "run_before" and run total quantity data "total_zero" input from the run level calculation circuit 53 as described below.

Then, the run encoding circuit 56 outputs encoding code obtained by performing the variable length encoding to multiplexing circuit 57.

Specifically, when the orthogonal transformation size signal TRSIZE indicates 4×4 and the non-0 coefficient quantity data "TotalCoeff" is 1 or larger and 7 or smaller, the run encoding circuit 56 performs variable length encoding on the run total quantity data "total_zero" based on the transformation table data TRNc shown in Table 3 below.

[Table 3]

| The transformation table data TRNc | | | | | | | |
|---|---|---|---|---|---|---|---|
| total_zeros | TotalCoeff | | | | | | |
| | 1 | 2 | 3 | 4 | 5 | 6 | 7 |
| 0 | 1 | 111 | 0101 | 00011 | 0101 | 0000 01 | 0000 01 |

(continued)

| The transformation table data TRNc | | | | | | | |
|---|---|---|---|---|---|---|---|
| total_zeros | TotalCoeff | | | | | | |
| | 1 | 2 | 3 | 4 | 5 | 6 | 7 |
| 1 | 011 | 110 | 111 | 111 | 0100 | 0000 1 | 00001 |
| 2 | 010 | 101 | 110 | 0101 | 0011 | 111 | 101 |
| 3 | 0011 | 100 | 101 | 0100 | 111 | 111 | 100 |
| 4 | 0010 | 011 | 0100 | 110 | 110 | 101 | 011 |
| 5 | 0001 1 | 0101 | 0011 | 101 | 101 | 100 | 11 |
| 6 | 00010 | 0100 | 100 | 100 | 100 | 011 | 010 |
| 7 | 0000 11 | 0011 | 011 | 0011 | 011 | 010 | 0001 |
| 8 | 0000 10 | 0010 | 0010 | 011 | 0010 | 0001 | 001 |
| 9 | 0000 011 | 00011 | 0001 1 | 0010 | 00001 | 001 | 0000 00 |
| 10 | 0000 010 | 0001 0 | 0001 0 | 0001 0 | 0001 | 0000 00 | |
| 11 | 0000 0011 | 0000 11 | 0000 01 | 0000 1 | 0000 0 | | |
| 12 | 0000 0010 | 0000 10 | 00001 | 0000 0 | | | |
| 13 | 0000 0001 1 | 0000 01 | 0000 00 | | | | |
| 14 | 0000 0001 | 0000 00 | | | | | |
| 15 | 0000 0000 1 | | | | | | |

Also, when the orthogonal transformation size signal TRSIZE indicates $4\times4$ and the non-0 coefficient quantity data ""TotalCoeff" is 8 or larger and 15 or smaller, the run encoding circuit 56 performs variable length encoding on the run total quantity data "total_zero" based on the transformation table data TRNd shown in Table 4 below.
[Table 4]

| The transformation table data TRNd | | | | | | | |
|---|---|---|---|---|---|---|---|
| total_zeros | TotalCoeff | | | | | | |
| | 8 | 9 | 10 | 11 | 12 | 13 | 14 | 15 |
| 0 | 0000 01 | 0000 01 | 0000 1 | 0000 | 0000 | 000 | 00 | 0 |
| 1 | 0001 | 0000 00 | 0000 0 | 0001 | 0001 | 001 | 01 | 1 |
| 2 | 00001 | 0001 | 001 | 001 | 01 | 1 | 1 | |
| 3 | 011 | 11 | 11 | 010 | 1 | 01 | | |
| 4 | 11 | 10 | 10 | 1 | 001 | | | |
| 5 | 10 | 001 | 01 | 111 | | | | |
| 6 | 010 | 01 | 0001 | | | | | |
| 7 | 001 | 0000 1 | | | | | | |
| 8 | 0000 00 | | | | | | | |

Also, when the block data to be encoded is color difference DC of $2\times2$, the run encoding circuit 56 performs variable length encoding on the run total quantity data "total_zero" based on the transformation table data TRNe shown in Table 5 below.
[Table 5]

| The transformation table data TRNe | | | |
|---|---|---|---|
| total_zeros | TotalCoeff | | |
| | 1 | 2 | 3 |
| 0 | 1 | 1 | 1 |
| 1 | 01 | 01 | 0 |
| 2 | 001 | 00 | |
| 3 | 000 | | |

Also, the run encoding circuit 56 performs variable length encoding on the run data "run_before"' based on the transformation table data TRNf shown in Table 6 below.
[Table 6]

| The transformation table data TRNf | | | | | | | |
|---|---|---|---|---|---|---|---|
| run_before | zeros Left | | | | | | |
| | 1 | 2 | 3 | 4 | 5 | 6 | >6 |
| 0 | 1 | 1 | 11 | 11 | 11 | 11 | 111 |
| 1 | 0 | 01 | 10 | 10 | 10 | 000 | 110 |
| 2 | - | 00 | 01 | 01 | 011 | 001 | 101 |
| 3 | - | - | 00 | 001 | 010 | 001 | 100 |
| 4 | - | - | - | 000 | 001 | 010 | 004 |
| 5 | - | - | - | - | 000 | 101 | 010 |
| 6 | - | - | - | - | - | 100 | 001 |
| 7 | - | - | - | - | - | - | 0001 |
| 8 | - | - | - | - | - | - | 00001 |
| 9 | - | - | - | - | - | - | 000001 |
| 10 | - | - | - | - | - | - | 0000001 |
| 11 | - | - | - | - | - | - | 00000001 |
| 12 | - | - | - | - | - | - | 000000001 |
| 13 | - | - | - | - | - | - | 0000000001 |
| 14 | - | - | - | - | - | - | 00000000001 |

The run encoding circuit 56 outputs encoding codes obtained by performing variable length encoding on run total quantity data "total_zero and the run data "run_before" to the multiplexing circuit 57.
The multiplexing circuit 57 generates image data S27 as a bit stream obtained by multiplexing the encoding codes input from the two-dimensional reversible encoding circuit 54, the level encoding circuit 55 and the run encoding circuit 56 and writes the same in the buffer memory 28.
Below, an overall operation of the encoding apparatus 2 shown in FIG. 2 will be explained.
An image signal as an input is converted to a digital signal in the A/D conversion circuit 22 first.
Next, relocating of frame image data is performed in the screen relocating circuit 23 in accordance with the GOP structure of image compression information to be output, and original image date 823 obtained thereby is output to the computing circuit 24, the motion prediction compensation circuit 42 and the intra-prediction circuit 41.
Next, the computing circuit 24 detects a difference between the original image data S23 from the screen relocating circuit 23 prediction image data PI from selection circuit 44 and outputs image date 824 indicating the difference to the orthogonal transformation circuit 25.

Next, the orthogonal transformation circuit 25 performs orthogonal transformation, such as discrete cosine transformation and Karhunen-Loeve transformation, on the image data S24 based on a block size indicated by the orthogonal transformation size signal TRSIZE input from the orthogonal transformation size determination circuit 45 to generate image data (DCT coefficient) S25 and outputs the same to the quantization circuit 26.

Next, the quantization circuit 26 performs quantization on the image data S25 based on a block size indicated by the orthogonal transformation size signal TRSIZE input from the orthogonal transformation size determination circuit 45 and outputs image data (quantized DCT coefficient) S26 to the reversible encoding circuit 27 and the inverse quantization circuit 29.

Next, as described above, the reversible encoding circuit 27 performs variable length encoding on the image data S26 to generate image data S27 and accumulates the same in the buffer memory 28.

Also, the rate control circuit 32 controls a quantization rate in the quantization circuit 26 based on the image data read from the buffer memory 28.

Also, the inverse quantization circuit 29 performs inverse quantization on the image data S26 input from the quantization circuit 26 and outputs the result to the inverse orthogonal transformation circuit 30.

Then, the inverse orthogonal transformation circuit 30 outputs image data generated by performing inverse transformation processing of that in the orthogonal transformation circuit 25 to the adding circuit 33.

In the circuit 33, the image data from the inverse orthogonal transformation circuit 30 and the prediction image data PI from the selection circuit 44 are added to generate reference image data "R_PIC", which is written in the frame memory 31.

Also, the intra-prediction circuit 41 performs intra-prediction encoding by block sizes of $4\times4$ and $16\times16$ on the block data read from the frame memory 31 and generates prediction image data.

Also, the motion prediction compensation circuit-42 performs inter-prediction encoding by block sizes of $16\times16$, $16\times8$, $8\times16$, $8\times8$, $8\times4$ and $4\times8$ on the block data read from the frame memory 31 and generates the prediction image data.

Then, among the prediction image data of the intra-prediction circuit 41 and the motion prediction compensation circuit 42, prediction image data with the minimum encoding cost is output to the computing circuit 24.

The orthogonal transformation size determination circuit 45 outputs an orthogonal transformation size signal TRSIZE indicating a block size used for generating the prediction image data output to the computing circuit 24 to the orthogonal transformation circuit 25, the quantization circuit 26 and the reversible encoding circuit 27.

As explained above, according to the encoding apparatus 2, in the reversible encoding circuit 27 shown in FIG. 3, by using the total transformation table data TRANa shown in Table 1 used for encoding transformation coefficients subjected to orthogonal transformation by $4\times4$, non-0 coefficient quantity data "TotalCoeff" and final continuing quantity data "TrailingOnes" of transformation coefficients subjected to orthogonal transformation by $8\times8$ can be encoded.

Also, according to the encoding apparatus 2, in the reversible encoding circuit 27, transformation table data TRNa, a2, a3 and a4 used for encoding sub block data SB1, SB2, SB3 and SB4 are selected by the (method 1) to (method 4), so that highly efficient encoding can be realized.

[Decoding Apparatus 3]

Below, the decoding apparatus 3 shown in FIG. 1 will be explained.

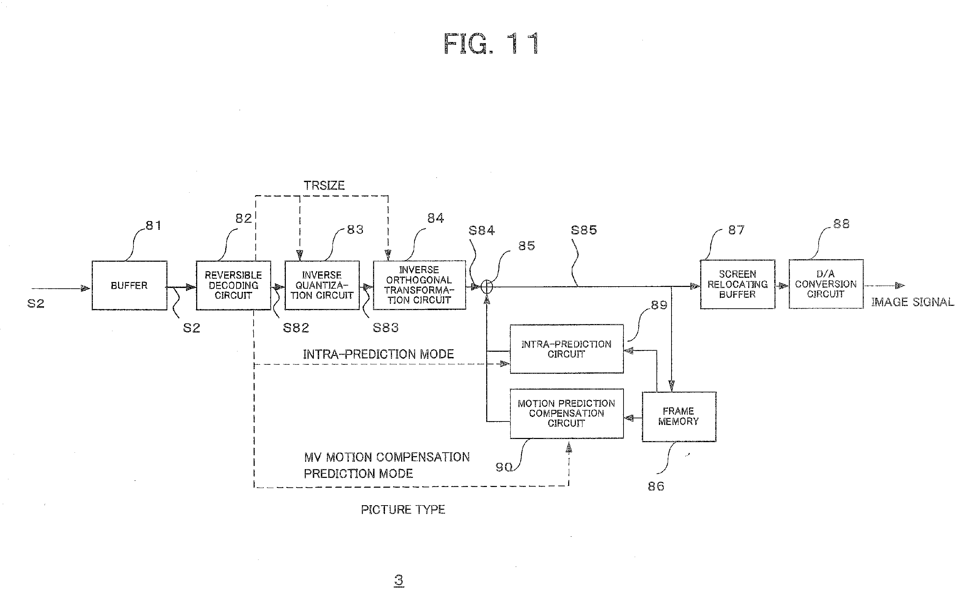

FIG. 11 is a view of a configuration of the decoding apparatus 3 shown in FIG. 1.

As shown in FIG. 11, the decoding apparatus 3 includes, for example, a buffer memory 81, a reversible decoding circuit 82, an inverse quantization circuit 83, an inverse orthogonal transformation circuit 84, an adding circuit 85, a frame memory 86, a screen relocating buffer 87, a D/A conversion circuit 88, an intra-prediction circuit 89 and a motion prediction compensation circuit 90.

The buffer memory 81 stores image data S2 as a bit stream received (input) from the encoding apparatus 2.

The inverse decoding circuit 82 decodes the image data S2 read from the buffer memory 81 by a method corresponding to inverse encoding by the inverse encoding circuit 27 shown in FIG. 2 and generates image data S82.

The inverse decoding circuit 82 separates and decodes the orthogonal transformation size signal TRSIZE multiplexed to be image data S2 and outputs the result to the quantization circuit 83 and the inverse orthogonal transformation circuit 84.

The inverse decoding circuit 82 will be explained in detail later on.

The inverse quantization circuit 83 generates image data S83 by performing inverse quantization by an inverse quantization method corresponding to the quantization method by the quantization circuit 26 shown in FIG. 2 on the image data S82 subjected to reversible decoding input from the reversible decoding circuit 82 based on the orthogonal transformation size signal TRSIZE input from the reversible decoding circuit 82 and outputs the same to the inverse orthogonal transformation circuit 84.

The inverse orthogonal transformation circuit 84 generates image data S84 by performing inverse orthogonal transformation corresponding to the orthogonal transformation by the orthogonal transformation circuit 25 shown in FIG. 2 on the image data S83 input from the inverse quantization circuit 83 based on the orthogonal transformation size signal TRSIZE input from the reversible decoding circuit 82 and outputs the same to the adding circuit 85.

The adding circuit 85 generates image data S85 by adding the prediction image input from the intra-prediction circuit 89 or the motion prediction compensation circuit 90 and the image data S84 input from the inverse orthogonal transformation circuit 84 and outputs the same to the frame memory 86 and the screen relocating buffer 87.

The screen relocating buffer 87 is used for relocating the image data S85 input from the adding circuit 85 to be in an order of being displayed in units of picture and reading out the same to the D/A conversion circuit 88.

The D/A conversion circuit 88 performs D/A conversion on the image data read from the screen relocating buffer 87 and generates an analog image signal.

When the block data to be processed in the image data S85 read from the frame memory 86 is subjected to intra-prediction encoding, the intra-prediction circuit 89 decodes the block data by an intra method to generate prediction image data and outputs the same to the adding circuit 85.

When the block data to be processed in the image data S85 read from the frame memory 86 is subjected to inter-prediction encoding, the motion prediction compensation circuit 90 decodes the block data by an inter method to generate prediction image data and outputs the same to the adding circuit 85.

Below, the reversible decoding circuit 82 shown in FIG. 11 will be explained.

FIG. 12 is a view of a configuration of the reversible decoding circuit 82 shown in FIG. 11.

As shown in FIG. 12, the reversible decoding circuit 82 includes, for example, a separation circuit 110, a two-dimensional reversible decoding circuit 111, a level decoding circuit 112, a run decoding circuit 113, a transformation coefficient recovery circuit 114, a block recovery circuit 115 and a scanning conversion circuit 116.

In the present embodiment, processing in the two-dimensional reversible decoding circuit 111, the level decoding circuit 112, the run decoding circuit 113, the transformation coefficient recovery circuit 114, the block recovery circuit 115 and the scanning conversion circuit 116 is performed by using an orthogonal transformation size signal TRSIZE separated by the separation circuit 110.

The separation circuit 110 separates (extracts) encoding codes of run data "run_before" and run total quantity data "total_zero" from the encoded image data S2 and outputs the same to the run decoding circuit 113.

Also, the separation circuit 110 separates an encoding code of level data "level" from the image data S2 and outputs the same to the level decoding circuit 112.

The separation circuit 110 separates encoding codes of non-0 coefficient quantity data "TotalCoeff", final continuing quantity data "TrailingOnes" and encoding data "trailing_ones_sing_flag" from the image data S2 and outputs the same to the two-dimensional reversible decoding circuit 111.

Also, the separation circuit 110 separates the orthogonal transformation size signal TRSIZE from the image data S2 and outputs the same to the two-dimensional reversible decoding circuit 111, the level decoding circuit 112, the run decoding circuit 113, the transformation coefficient recovery circuit 114, the block recovery circuit 115 and the conversion circuit 116 shown in FIG. 12 and the inverse quantization circuit 83 and the inverse orthogonal transformation circuit 84 shown in FIG. 11.

The two-dimensional reversible decoding circuit 111 selects one of the transformation table data TRNa1 to 5 in the total transformation table data shown in Table 1 described above by using the orthogonal transformation size signal TRSIZE by the same method as that in the two-dimensional reversible decoding circuit 54 shown in FIG. 3 described above.

Then, the two-dimensional reversible decoding circuit 111 decodes the encoding codes input from the separation circuit 110 by using the selected transformation table data TRNa1 to 5, retrieves non-0 coefficient quantity data "TotalCoeff" and final continuing quantity data "TrailingOnes" and outputs the same to transformation coefficient recovery circuit 114.

Also, the two-dimensional reversible decoding circuit 111 decodes the encoding codes separated by the separation circuit 110, retrieves encoding data "trailing_ones_sing_flag" and outputs the same to the transformation coefficient recovery circuit 114.

The level decoding circuit 112 performs decoding corresponding to the variable length encoding by the level encoding circuit 55 shown in FIG. 3 by using transformation table data TRNB shown in Table 2 described above, retrieves level data "level" corresponding' to the encoding code input from the separation circuit 110 and outputs the same to the transformation coefficient recovery circuit 114.

The run decoding circuit 113 performs decoding corresponding to variable length coding by the run encoding circuit 56 shown in FIG. 3 by using the transformation table data TRNc, TRNd, TRNe and TRNf shown in Table 3, Table 4, Table 5 and Table 6 described above, retrieves run data "run_before" and run total quantity data "total_zero" corresponding to the encoding codes from the separation circuit 110, and outputs the same to transformation coefficient recovery circuit 114.

The transformation coefficient recovery circuit 114 generates transformation coefficients by performing inverse processing of the processing by the run level calculation circuit 53 shown in FIG. 3 based on the non-0 coefficient quantity data "TotalCoeff", final continuing quantity data "TrailingOnes" and encoding data "trailing_ones_sing_flag" input from the two-dimensional reversible decoding circuit 111 and run data "run_before" and run total quantity "total_zero" input from the run decoding circuit 113 and outputs the same to the block recovery circuit 115.

When the orthogonal transformation size signal TRSIZE indicates 4×4, the block recovery circuit 115 transformation coefficients for the 4×4 input from the transformation coefficient recovery circuit 114.

When orthogonal transformation size signal TRSIZE indicates 8×8, the block recovery circuit 115 stores transformation coefficients for the 8×8 input from the transformation coefficient recovery circuit 114.

When the orthogonal transformation size signal TRSIZE indicates 4×4, the scanning transformation circuit 116 reads transformation coefficients for the 4x4 stored in the transformation coefficient recovery circuit 114 in an order suitable to inverse quantization by the inverse quantization circuit 83 shown in FIG. 11 and outputs the same as image data S82 to the inverse quantization circuit 83.

Also, when the orthogonal transformation size signal TRSIZE indicates 8×8, the scanning transformation circuit 116 reads transformation coefficients for the 8×8 stored in the transformation coefficient recovery circuit 114 in the scanning order shown in FIG. 5 and in an order suitable to inverse quantization by the inverse quantization circuit 83 shown in FIG. 11 in consideration of an of the sub block data SB1, SB2, SB3 and SB4 shown in FIG. 8 and outputs the same as image data S82 to the inverse quantization circuit 83.

According to the decoding apparatus 3, encoding codes of the non-0 coefficient quantity data "TotalCoeff" and final continuing quantity data "TrailingOnes" encoded by the encoding apparatus 2 can be recovered.

The present invention is not limited to the embodiments.

For example, in the embodiments, the total transformation table data TRNa shown in Table 1 was mentioned as an example of correspondence data for encoding the non-0 coefficient quantity data "TotalCoeff", final continuing quantity data "TrailingOnes", however, other transformation table data may be used as the transformation table data TRNa.1, 2, 3 and 4 as far as it is regulated, so that bit lengths of the non-0 coefficient quantity data "TotalCoeff" indicating "0" are different from one another and the maximum bit length of the encoding code becomes longer as the bit length of the non-0 coefficient quantity data "total Coeff" indicating "0" becomes shorter.

Also, in the encoding apparatus 2 described above, the case of realizing the encoding processing shown in FIG. 10 by circuits composing the reversible encoding circuit 27 shown in FIG. 3 was explained as an example, but all or a part of the processing may be performed by a CPU (central processing unit), etc. in accordance with description in the program.

Also, in the decoding apparatus 3 explained above, the case of realizing the decoding processing by circuits composing the reversible decoding circuit 82 shown in FIG. 11 was explained as an example, but all or a part of the processing may be performed by a CPU, etc. in accordance with description in the program.

INDUSTRIAL APPLICABILITY

The present invention can be applied to an encoding system, etc. for encoding transformation coefficients of orthogonal transformation.

CLAUSES

1. An encoding method for performing variable length encoding by using correspondence data on non-0 coefficient quantity data indicating a quantity of non-0 transformation coefficients in a plurality of transformation coefficients obtained by performing orthogonal transformation on image block data, comprising:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from another, and the maximum bit length of said encoding codes to be used by the correspondence data becomes longer as the bit lengths of the non-0 coefficient quantity data indicating "0"' becomes shorter, a first step for assigning a plurality of transformation coefficients obtained by performing orthogonal transformation on image block data having a second block size, which is a multiple of said first block size, to one sub block data in accordance with a frequency corresponding to the transformation coefficients among a plurality of sub block data composed of said transformation coefficients by the same number as that in image block data having said first block size; a second step for generating said non-0 coefficient quantity data for each of said plurality of sub block data based on said transformation coefficients assigned to the sub block data in said first step; and a third step for determining said encoding codes to be assigned to said non-0 coefficient quantity data generated in said second step for each of said plurality of sub block data by using said correspondence data in which an encoding code having a shorter bit length is assigned to said non-0 coefficient quantity data indicating "0" comparing with said correspondence data used for other sub block data on the direct current component side with respect to the sub block data.

2. An encoding method as set forth in Clause 1, wherein said first step uses said plurality of sub block data regulated to be in accordance with frequencies in a plurality of sub blocks obtained by dividing a vertically and horizontally two-dimensional frequency region.

3. An encoding method as set froth in Clause 1, further comprising:

a fourth step for generating said non-0 coefficient quantity data of the image block data based on a plurality of transformation coefficients obtained by performing orthogonal transformation on said image block data having said first block size;

a fifth step for specifying a quantity of transformation coefficients other than "0" and "1" as an absolute value in said transformation coefficients of other image block data related to display positions around a display position related to said image block data having said first block size, and selecting said correspondence data, wherein said non-0 coefficient quantity data and an encoding code having a shorter bit length are related, as the specified quantity becomes smaller; and

a sixth step for determining said encoding code of said non-0 coefficient quantity data of said image block data having said first block size by using the correspondence data selected in said fifth step.

4. An encoding method as set forth in Clause 3, wherein:

said first, second and third steps are executed when said orthogonal transformation is performed in units of image block data having said second block size; and

said fourth, fifth and sixth steps are executed when said orthogonal transformation is performed in units of image block data having first block size.

5. An encoding method as set forth in Clause 1, wherein:

when said first block size is $N \times N$ (N is an integer) and said second block size is 2Nx2N,

said first step scans transformation coefficients of said image data having said second block size successively from a transformation coefficient corresponding to a frequency close to direct current components, and generates first sub block data composed of transformation components scanned first to $N^2$ - th, second sub block data composed of transformation components scanned $(N^2+1)$-th to $2N^2$-th, third sub block data composed of transformation components scanned $(2N^2+1)$-th to $3N^2$-th, and fourth sub block data composed of transformation components scanned $(3N^2+1)$-th to $4N^2$-th; and

said third step determines said encoding code of said non-0 coefficient quantity data of said first sub block data by using said correspondence data, wherein a bit length of said encoding code to be assigned to said non-0 coefficient quantity data indicating "0" is longer comparing with that in said correspondence data used for encoding said non-0 coefficient quantity data of said second and third sub block data generated in said second step, and determines said code of said non-0 coefficient quantity data of said fourth sub block data by said correspondence data, wherein a bit length of said encoding code to be assigned to said non-0 coefficient quantity indicating "0" is shorter comparing with that in said correspondence data used for encoding said non-0 coefficient quantity data of said second and third sub block data generated in said second step.

6. An encoding method as set forth in Cause 1, wherein:

said correspondence data

regulates said encoding code to be assigned to a set of final continuing quantity data of transformation coefficients of "1" as an absolute value continuing at the end of a series of said transformation coefficients obtained by performing orthogonal transformation on said block data and said non-0 coefficient quantity data; and

regulates a bit length of said encoding code to be the or longer as said final continuing quantity data becomes larger for a plurality of sets, wherein said final continuing quantity data is different but said non-0 coefficient quantity data is the same.

7. An encoding apparatus for performing variable length encoding by using data on non-0 coefficient quantity data a quantity of non-0 transformation coefficients in a plurality of transformation coefficients obtained by performing orthogonal transformation on image block data, comprising:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of said encoding codes to be used by the correspondence data becomes longer as the bit lengths of the non-0 coefficient quantity data indicating "0" becomes shorter, an assigning means for assigning a plurality of transformation coefficients obtained by performing orthogonal transformation on image block data having a second block size, which is a multiple of said first block size, to one sub block data in accordance with a frequency corresponding to the transformation coefficients among a plurality of sub block data composed of said transformation coefficients by the number as that in image block data having said first block size;
a generating means for generating said non-0 coefficient quantity data for each of said plurality of sub block data based on said transformation coefficients assigned to the sub block data by said assigning means; and
an encoding means for determining said encoding codes to be assigned to said non-0 coefficient quantity data generated by said generation four each of said plurality of sub block data by using said correspondence data in which an encoding code having a shorter bit length is assigned to said non-0 coefficient quantity data indicating "0" comparing with said correspondence data used for other sub block data on the direct current component side with respect to the sub block data.

8. An encoding apparatus as set forth in Clause 7, further including:

a differential generating means for generating differential date of image data to be encoded and the prediction image data; and
an orthogonally transforming means for performing said orthogonal transformation on said differential image data generated by said differential generating means in units of image block data having said first block size or said second block size,
wherein said assigning means performs said assigning on said plurality of transformation coefficients obtained by performing orthogonal transformation on the image block data having said second block size by said orthogonally transforming means.

9. A program to be executed by a computer to perform encoding processing of variable length encoding by using correspondence data on non-0 coefficient quantity data indicating a quantity of non-0 transformation coefficients in a plurality of transformation coefficients obtained by performing orthogonal transformation on image block data, by which:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of said encoding codes to be used by the correspondence data becomes longer as the bit lengths of the non-0 coefficient quantity data indicating "0" becomes shorter, a first procedure for assigning a plurality of transformation coefficients obtained by performing orthogonal transformation on image block data having a second block size, which is a multiple of said first block size, to one sub block data in accordance with a frequency corresponding to the transformation coefficients among a plurality of sub block data composed of said transformation coefficients by the same number as that in image block data having said first block size;
a second procedure for generating said non-0 coefficient quantity data for each of said plurality of sub block data based on said transformation coefficients assigned to the sub block data in said first procedure; and
a third procedure for determining said encoding codes to be assigned to said non-0 coefficient quantity data generated in said second procedure for each of said plurality of sub block data by using said correspondence data in which an encoding code having a shorter bit length is assigned to said non-0 coefficient quantity data indicating "0" comparing with said correspondence data used for other sub block data on the direct current component side with respect to the sub block data
are executed by said computer.

10. A decoding method, for assigning transformation coefficients obtained by performing orthogonal transformation on image data to be encoded in units of block data having a second block size, which is a multiple of a first block size, to a plurality of sub block data in accordance with frequencies related to the transformation coefficients; generating non-0 coefficient quantity data indicating a quantity of non-0 transformation coefficients in transformation coefficients composing the sub block data for each of said plurality of sub block data; and, when an encoding code of said non-0 coefficient quantity data is obtained by using predetermined correspondence data, retrieving said non-0 coefficient quantity data from said encoding code by using said correspondence data, including:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of said encoding codes to be used by the correspondence data becomes longer as the bit lengths of the non-0 coefficient quantity data indicating "0" becomes shorter, a first step for determining said non-0 coefficient quantity data of each of said encoding codes of said plurality of sub block data by using said correspondence data, wherein an encoding code having a longer bit length comparing with that in said correspondence data used for said sub block data on the direct current component side and said non-0 coefficient quantity data indicating "0" are related for the sub block data; a second step for generating said transformation coefficients composing the sub block data based on said non-0 coefficient quantity data determined in said first step for each of said plurality of sub block data; and a third step for relocating said transformation coefficients generated in said second step and obtaining transformation coefficients of said block data having said second block size.

11. A decoding method as set forth in Clause 10, including:

when decoding said encoding codes of said non-0 coefficient quantity data of transformation coefficients obtained by performing orthogonal transformation on image data to be encoded in units of block data having a first block size, a fourth step for specifying a quantity of transformation coefficients other than "0" and "1" as an absolute value in said transformation coefficients of other image block data related to display positions around a display position related to said image block data having said first block size; a fifth step for selecting said correspondence data, wherein said non-0 coefficient quantity data and an encoding code having a shorter bit length are related, as the quantity specified in said fourth step becomes smaller; a sixth step for determining said non-0 coefficient quantity data corresponding to said encoding code of said image block data having said first block size by using the correspondence data selected in said fifth step; and a seventh step for generating said transformation coefficients of said block data having said first block size based on said non-0 coefficient quantity data determined in said sixth step.

12. A decoding method as set forth in Clause 11, wherein:

said fourth, fifth, sixth and seventh steps are executed when said first block size is instructed; and said first, second and third steps are executed when said second block size is instructed.

13. A decoding apparatus, for assigning transformation coefficients obtained by performing orthogonal transformation on image data to be encoded in units of block data having a second block size, which is a multiple of a first block size, to a plurality of sub block in with frequencies corresponding to the transformation coefficients; generating non-0 coefficient quantity data indicating a quantity of non-0 transformation coefficients in transformation coefficients composing the sub block four each oft said plurality of sub block data; and, when an encoding code of said non-0 coefficient quantity data is obtained by using predetermined correspondence data, retrieving said non-0 coefficient quantity data from said encoding code by using said correspondence data, including:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of said encoding codes to be used by the correspondence data becomes longer as the bit lengths of the non-0 coefficient quantity data indicating "0" becomes shorter, a determining means for determining said non-0 coefficient quantity data of each of said encoding codes of said plurality of sub block data by using said correspondence data, wherein an encoding code having a longer bit length comparing with that in said correspondence data used for said sub block data on the direct current component side and said non-0 coefficient quantity data indicating "0" are related for the sub block data as the bit lengths of non-0 coefficients quantity data indicating "0" becomes shorter; a generating means for generating said transformation coefficients composing the sub block data based on said non-0 coefficient quantity data determined in said determining means for of said plurality of sub block data; and

a retrieving means for relocating said transformation coefficients generated by said generating means and obtaining transformation coefficients of said block data having said second block size.

14. A program to be executed by a computer, for assigning transformation coefficients obtained by performing orthogonal transformation on image data to be encoded in units of block data having a second block size, which is a multiple of a first block size, to a plurality of sub block data in accordance with frequencies related to the transformation coefficients; generating non-0 coefficient quantity data indicating a quantity of non-0 transformation coefficients in transformation coefficients composing the sub block for each of said plurality of sub block data; and, when an encoding code of said non-0 coefficient quantity data is obtained by using predetermined correspondence data, retrieving said non-0 coefficient quantity data from said encoding code by using said correspondence data, by which:

when, for respective possible values of said non-0 coefficient quantity data in the image block data having a first block size, using a plurality of correspondence data each regulating correspondence of the non-0 coefficient quantity data to the encoding code, so that bit lengths of non-0 coefficient quantity data indicating "0" become different from one another, and the maximum bit length of said encoding codes to be used by the correspondence data becomes longer as the bit lengths of the non-0 coefficient quantity data indicating "0" becomes shorter, a first procedure for determining said non-0 coefficient quantity data of each of said encoding codes of said plurality of sub block data by using said correspondence data, wherein an encoding code having a longer bit length comparing with that in said correspondence data used for said sub block data on the direct current component side and said non-0 coefficient quantity data indicating "0" are related for the sub block data; a second procedure for generating said transformation coefficients composing the sub block data based on said non-0 coefficient quantity data determined in said first procedure for each of said plurality of sub block data; and

a third procedure for relocating said transformation coefficients generated in said second procedure and obtaining transformation coefficients of said block data having said second block size are executed by said computer.

## Claims

1. An encoding apparatus for encoding image data comprising:

production means for producing a sub-block of the image data having a sub-block size which is smaller than the size of an orthogonal-transformation block from an encoding process-targeted block of said image data, wherein the sub-block is produced by orthogonally-transforming the transformation coefficients in each sub-block in a predefined scanning order;
selection means for selecting corresponding relational data which indicate the relationship between an encoding code and the number of transformation coefficients having an absolute value of 1 (TrailingOnes) in accordance with the number of transformation coefficients included in said sub-block produced by said production means or in accordance with an index data value calculated in response to the location of said sub-block; and
obtaining means for obtaining the encoding code from the number of transformation coefficients having an absolute value of 1 (TrailingOnes) produced by said production means by using said corresponding relational data selected by said selection means.

2. The encoding apparatus of claim 1, further comprising: calculation means for calculating the value of said index data by using the number of transformation coefficients in said sub-block which are neither zero nor have an absolute value of 1.

3. The encoding apparatus of claim 2, wherein in a case in which the block size of the upper block neighboring on the upper side of said process-targeted block and the block size of the left block neighboring on the left side of said process-targeted block are the same, said calculation means calculates the index data with respect to the sub-block within said process-targeted block by using the index data from the sub-blocks which are at the same locations within said upper block and said left block.

4. The encoding apparatus of claim 2, wherein in a case in which the block size of upper block neighboring on the upper side of said process-targeted block and the block size of a left block neighboring on the left side of said process-targeted block are different, said calculation means calculates the index data from the sub-block which is at the same location within the block whose block size is as large as the index data with respect to the sub-block within said process-targeted block.

5. The encoding apparatus of claim 3, wherein said calculation means calculates the index data (nC) of the sub-block within said process-targeted block by the formula:

$$nC = (nA + nB + 1) \gg 1$$

where 'nA' is index data of the sub-block within said left block, and 'nB' is the index data of the sub-block within said upper block.

6. The encoding apparatus of claim 1, wherein the size of said orthogonal-transformation block is $8\times8$ and said sub-block size is $4\times4$.

7. The encoding apparatus of claim 1, wherein said corresponding relational data are defined such that the bit length of said encoding code becomes longer as the bit length of the number of transformation coefficients having an absolute value of 1 (TrailingOnes) becomes longer.

8. An encoding method for encoding image data comprising:

producing a sub-block of the image data having a sub-block size which is smaller than the size of an orthogonal-transformation block from an encoding process-targeted block of said image data, wherein the sub-block is produced by orthogonally-transforming the transformation coefficients in each sub-block in a predefined scanning order;

selecting corresponding relational data which indicate the relationship between an encoding code and the number of transformation coefficients having an absolute value of 1 (TrailingOnes) in accordance with the number of transformation coefficients included in said sub-block produced by said production means or in accordance with an index data value calculated in response to the location of said sub-block; and

obtaining the encoding code from the number of transformation coefficients having an absolute value of 1 (TrailingOnes) produced in said producing step by using said corresponding relational data selected in said selecting step.

FIG. 1

ENCODING
APPARATUS

TRANSMITTING MEDIA

DECODING
APPARATUS

1

# FIG. 2

2

# FIG. 3

S26 →

**51** SCANNING TRANSFORMATION CIRCUIT

run__before, total__zeros

**56** RUN ENCODING CIRCUIT

**57** MULTIPLEXING CIRCUIT → S27

**52** SUB BLOCK DIVIDING CIRCUIT

**53** RUN LEVEL CALCULATION CIRCUIT

level

**55** LEVEL ENCODING CIRCUIT

**54** TWO-DIMENSIONAL REVERSIBLE ENCODING CIRCUIT

27

TotalCoeff, TrailingOnes

FIG. 4A

| 0 | 1 | 5 | 6 |
|---|---|---|---|
| 2 | 4 | 7 | 12 |
| 3 | 8 | 11 | 13 |
| 9 | 10 | 14 | 15 |

FIG. 4B

| 0 | 2 | 8 | 12 |
|---|---|---|---|
| 1 | 5 | 9 | 13 |
| 3 | 6 | 10 | 14 |
| 4 | 7 | 12 | 15 |

EP 2 369 844 A1

# FIG. 5

|   | 0 | 1 | 2 | 3 | 4 | 5 | 6 | 7 |
|---|---|---|---|---|---|---|---|---|
| 0 | 0 | 1 | 5 | 6 | 14 | 15 | 27 | 28 |
| 1 | 2 | 4 | 7 | 13 | 16 | 26 | 29 | 42 |
| 2 | 3 | 8 | 12 | 17 | 25 | 30 | 41 | 43 |
| 3 | 9 | 11 | 18 | 24 | 31 | 40 | 44 | 53 |
| 4 | 10 | 19 | 23 | 32 | 39 | 45 | 52 | 54 |
| 5 | 20 | 22 | 33 | 38 | 46 | 51 | 55 | 60 |
| 6 | 21 | 34 | 37 | 47 | 50 | 56 | 59 | 61 |
| 7 | 35 | 36 | 48 | 49 | 57 | 58 | 62 | 63 |

# FIG. 6

S26(ORTHOGONAL TRANSFORMATION COEFFICIENT)

|      |    |    |    |
|------|----|----|----|
| +23  | -4 | +8 | -3 |
| +11  | 0  | 0  | 0  |
| 0    | 0  | -1 | 0  |
| +1   | 0  | 0  | 0  |

ZIGZAG SCANNING

level(COEFFICIENT VALUE)

run__before
(CONTINUING QUANTITY
OF "0" BEFORE
COEFFICIENT VALUE)

TrailingOnes, trailing__ones__sing__flag
(QUANTITY AND CODE OF COEFFICIENT "1" AS
ABSOLUTE VALUE CONTINUING AT THE END)

| +23 | -4 | +11 | 0 | 0 | +8 | -3 | 0 | 0 | +1 | 0 | -1 | 0 | 0 | 0 | 0 |

WHEN TRSIZE INDICATES 4×4

TotalCoeff(QUANTITY OF NON-0
COEFFICIENT)

total__zeros(QUANTITY OF "0" COEFFICIENT
BEFORE FINAL NON-0 COEFFICIENT)

EP 2 369 844 A1

33

EP 2 369 844 A1

# FIG. 7A

# FIG. 7B

# FIG. 8

DC

| SB1 | SB2 |
|-----|-----|
| SB3 | SB4 |

# FIG. 9

B

A

C

| SB1 | SB2 |
|-----|-----|
| SB3 | SB4 |

| SB1 | SB2 | SB1 | SB2 |
|-----|-----|-----|-----|
| SB3 | SB4 | SB3 | SB4 |

# FIG. 10

```
                          START

ST11
              TRSIZE INDICATES 4×4?          N

                    Y
ST12    SCANNING IN UNITS OF 4×4          ST17    SCANNING IN UNITS OF 8×8

        RUN LEVEL CALCULATION PROCESSING           GENERATING FOUR 4×4 SUB BLOCKS
ST13    (GENERATING TotalCoeff AND TrailingOnes ETC.)   ST18

                                                   RUN LEVEL CALCULATION PROCESSING ON EACH
ST14    GENERATING INDEX DATA nC             ST19  SUB BLOCK (GENERATING TotalCCoeff AND
                                                   TrailingOnes ETC.)

ST15    SELECT ONE OF TRANa1 TO 5                  DETERMINING INDEX DATA nC OF EACH SUB BLOCK
        BASED ON INDEX DATA NC                     (DETERMINING nC LARGER THAN SB2 AND SB3 AS SB1, AND
                                             ST20  DETERMINING nC SMALLER THAN SB2 AND SB3 AS SB4)

        RETRIEVING ENCODING CODES                  SELECTING ONE OF TRNa1 TO 5 FOR EACH SUB BLOCK
        OF SET OF TotalCoeff AND             ST21  BASED ON EACH SUB BLOCK (SELECTING TRNa HAVING
ST16    TrailingOnes BASED ON                      SHORTER ENCODING CODE WHEN TotalCoeff IS "0", AS nC
        SELECTED TRNa1 TO 5                        BECOMES SMALLER)

                                                   OBTAIN ENCODING CODES OF TotalCoeff, TrailingOnes OF EACH
                                             ST22  SUB BLOCKS ON THE BASIS OF THE SELECTED TRNa 1~5

27
                          END
```

# FIG. 11

TRSIZE

BUFFER 81
S2 → S2

REVERSIBLE DECODING CIRCUIT 82
S2

INVERSE QUANTIZA-TION CIRCUIT 83
S82

INVERSE ORTHOGONAL TRANSFORMA-TION CIRCUIT 84
S83

S84

85

S85

INTRA-PREDICTION MODE

INTRA-PREDICTION CIRCUIT

MOTION PREDICTION COMPENSATION CIRCUIT 90

FRAME MEMORY 86

89

SCREEN RELOCATING BUFFER 87

D/A CONVERSION CIRCUIT 88
IMAGE SIGNAL

MV MOTION COMPENSATION PREDICTION MODE

PICTURE TYPE

3

# FIG. 12

EP 2 369 844 A1

run_before, total_zeros

RUN DECODING
CIRCUIT

/113

SEPARATING
CIRCUIT

/110

S2

level

LEVEL DECODING
CIRCUIT

/112

TRANSFORMATION
COEFFICIENT
RECOVERY
CIRCUIT

/114

BLOCK
RECOVERY
CIRCUIT

/115

SCANNING
TRANSFORMATION
CIRCUIT

/116

82

TWO-DIMENSIONAL
REVERSIBLE
DECODING CIRCUIT

/111

TotalCoeff, TrailingOnes

EP 2 369 844 A1

Europäisches
Patentamt
European
Patent Office
Office européen
des brevets

**EUROPEAN SEARCH REPORT**

Application Number

EP 11 16 1831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 408 695 A2 (NTT DOCOMO INC [JP])<br>14 April 2004 (2004-04-14)<br>* abstract *<br>* paragraph [0001] - paragraph [0017] *<br>* paragraph [0035] - paragraph [0045] *<br>* paragraph [0060] *<br>* figures 1, 4, 6 *<br>----- | 1,6-8<br><br>2,5 | INV.<br>H04N7/26 |
| Y | JOINT VIDEO TEAM (JVT) OF ISO/IEC MPEG AND<br>ITU-T VCEG:  "Draft ITU-T Recommendation<br>and Final Draft International Standard of<br>Joint Video Specification (ITU-T Rec.<br>H.264   ISO/IEC 14496-10 AVC)",<br>INTERNET CITATION,<br>14 March 2003 (2003-03-14), pages 152-159,<br>XP002650896,<br>Retrieved from the Internet:<br>URL:http://wftp3.itu.int/av-arch/jvt-site/<br>2003_03_Pattaya/JVT-G050r1.zip<br>[retrieved on 2011-07-20]<br>* the whole document *<br>----- | 2,5 | |
| A | Joint Video Team (JVT) of ISO/IEC MPEG and<br>ITU-T VCEG:  "Joint Final Committee Draft<br>(JFCD) of Joint Video Specification (ITU-T<br>Rec. H.264 ¦ ISO/IEC 14496-10 AVC)",<br>,<br>22 July 2002 (2002-07-22), pages 88-92,<br>XP002649428,<br>Klagenfurt, Austria<br>Retrieved from the Internet:<br>URL:http://wftp3.itu.int/av-arch/jvt-site/<br>2002_07_Klagenfurt/JVT-D157<br>[retrieved on 2011-03-24]<br>* the whole document *<br>-----<br><br>                              -/-- | 1-8 | TECHNICAL FIELDS SEARCHED (IPC)<br><br>H04N |

The present search report has been drawn up for all claims

| Place of search | Date of completion of the search | Examiner |
|---|---|---|
| Munich | 20 July 2011 | Le Guen, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

39

Europäisches
Patentamt

European
Patent Office

Office européen
des brevets

# EUROPEAN SEARCH REPORT

Application Number

EP 11 16 1831

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/066974 A1 (KARCZEWICZ MARTA [US] ET AL) 8 April 2004 (2004-04-08)<br>* abstract *<br>* paragraph [0001] - paragraph [0031] *<br>* paragraph [0083] - paragraph [0089] *<br>* figures 5, 6, 7, 8, 11 *<br>----- | 1-8 | |
| A | ADACHI S ET AL: "CAVLC Cleanup to Accommodate ABT including Field Scans", JOINT VIDEO TEAM (JVT) OF ISO/IEC MPEG & ITU-T VCEG(ISO/IEC JTC1/SC29/WG11 AND ITU-T SG16 Q6),<br>9 October 2002 (2002-10-09), pages 1-4, XP002339408,<br>* the whole document *<br>----- | 1-8 | |

TECHNICAL FIELDS
SEARCHED       (IPC)

The present search report has been drawn up for all claims

| Place of search | Date of completion of the search | Examiner |
|---|---|---|
| Munich | 20 July 2011 | Le Guen, Benjamin |

EPO FORM 1503 03.82 (P04C01)

**ANNEX TO THE EUROPEAN SEARCH REPORT
ON EUROPEAN PATENT APPLICATION NO.**

EP 11 16 1831

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2011

| Patent document cited in search report | | Publication date | Patent family member(s) | | Publication date |
|---|---|---|---|---|---|
| EP 1408695 | A2 | 14-04-2004 | CN | 1497503 A | 19-05-2004 |
| | | | DE | 60307396 T2 | 21-12-2006 |
| | | | JP | 3679083 B2 | 03-08-2005 |
| | | | JP | 2004134896 A | 30-04-2004 |
| | | | US | 2009028450 A1 | 29-01-2009 |
| | | | US | 2004126028 A1 | 01-07-2004 |
| | | | US | 2007154105 A1 | 05-07-2007 |
| | | | US | 2011019745 A1 | 27-01-2011 |
| | | | US | 2011019730 A1 | 27-01-2011 |
| | | | US | 2011097005 A1 | 28-04-2011 |
| US 2004066974 | A1 | 08-04-2004 | AU | 2003253133 A1 | 23-04-2004 |
| | | | CA | 2498384 A1 | 15-04-2004 |
| | | | CN | 1689026 A | 26-10-2005 |
| | | | CN | 101132534 A | 27-02-2008 |
| | | | EG | 23916 A | 30-12-2007 |
| | | | EP | 1546995 A1 | 29-06-2005 |
| | | | WO | 2004032032 A1 | 15-04-2004 |
| | | | JP | 4308138 B2 | 05-08-2009 |
| | | | JP | 2006501740 A | 12-01-2006 |
| | | | KR | 20050052523 A | 02-06-2005 |
| | | | RU | 2330325 C2 | 27-07-2008 |

EPO FORM P0459

For more details about this annex : see Official Journal of the European Patent Office, No. 12/82